(19) Europäisches Patentamt
European Patent Office
Office européen des brevets

(11)  **EP 3 650 588 B1**

(12)  **EUROPEAN PATENT SPECIFICATION**

(45) Date of publication and mention
of the grant of the patent:
**06.10.2021  Bulletin 2021/40**

(21) Application number: **19789571.7**

(22) Date of filing: **03.06.2019**

(51) Int Cl.:
*D01F 1/10* (2006.01)     *C03C 3/19* (2006.01)
*D06M 15/263* (2006.01)    *D06M 15/333* (2006.01)
*D06M 15/55* (2006.01)     *D06M 15/564* (2006.01)
*D06M 101/16* (2006.01)    *C03C 4/00* (2006.01)
*C03C 12/00* (2006.01)     *D02J 1/22* (2006.01)

(86) International application number:
**PCT/JP2019/021948**

(87) International publication number:
**WO 2020/066130 (02.04.2020 Gazette 2020/14)**

(54) **ANTIMICROBIAL FIBER AND METHOD OF MANUFACTURING ANTIMICROBIAL FIBER**

ANTIBAKTERIELLE FASER UND VERFAHREN ZUR HERSTELLUNG EINER ANTIBAKTERIELLEN FASER

FIBRE ANTIMICROBIENNE ET PROCÉDÉ DE FABRICATION DE FIBRE ANTIMICROBIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **28.09.2018  JP 2018184740**

(43) Date of publication of application:
**13.05.2020  Bulletin 2020/20**

(73) Proprietor: **Koa Glass Co., Ltd.**
**Tokyo 132-0035 (JP)**

(72) Inventor: **KOBAYASHI, Yoshinao**
**Tokyo 132-0035 (JP)**

(74) Representative: **Beyer, Andreas**
**Patentanwälte Bressel und Partner mbB**
**Potsdamer Platz 10**
**10785 Berlin (DE)**

(56) References cited:
**WO-A1-2012/098742     JP-A- H0 551 815**
**JP-A- H10 212 619      JP-A- 2001 247 333**
**JP-A- 2004 084 153     JP-A- 2008 063 697**
**JP-A- 2011 226 024     JP-A- 2016 069 771**
**JP-B1- S4 829 490      US-A1- 2014 020 197**

**Description**

TECHNICAL FIELD

The present invention relates to an antibacterial fiber and a method for producing an antibacterial fiber.

The invention relates particularly to an antibacterial fiber that exhibits predetermined antibacterial properties even when washed repeatedly for several dozen times, and a method for producing an antibacterial fiber.

BACKGROUND ART

Conventionally, in order to impart an antibacterial effect to textile products, antibacterial fibers obtained by incorporating antibacterial particles into fibers have been used.

Regarding a method for producing such antibacterial fibers, a method of attaching antibacterial particles to fibers obtained after spinning and a method of kneading in advance antibacterial particles into a resin material before spinning, are available.

As an antibacterial fiber obtained by a method of attaching antibacterial particles to a fiber after spinning, there is disclosed an antibacterial fiber obtained according to a method of immersing a cotton cloth in a dispersion liquid of zeolite particles containing silver and a polyether resin, and then drying the cotton cloth (see, for example, Patent Document 1).

Furthermore, as an antibacterial fiber obtained by a method of kneading in advance antibacterial particles into a resin material before spinning, there is disclosed an antibacterial fiber obtained by kneading titanium oxide master pellets and zinc oxide master pellets, subsequently spinning the kneading product, and further subjecting the resultant to a stretching treatment (see, for example, Patent Document 2).

Antibacterial fibers and method of their preparation are described also in US2014/020197.

CITATION LIST

PATENT DOCUMENT

    Patent Document 1: JP 2013-185292 A (claims and the like)
    Patent Document 2: JP 2009-84758 A (claims and the like)

SUMMARY OF THE INVENTION

PROBLEM TO BE SOLVED BY THE INVENTION

However, the antibacterial fiber disclosed in Patent Document 1 uses a binder in order to fix antibacterial particles to the fiber surface; however, there is found a problem that the antibacterial particles could be easily eliminated when fibers rub against one another.

Furthermore, since the water-resistance of the surface-treated portion is lower than the fiber as a parent body, the antibacterial performance after washing is markedly deteriorated, and there is found a problem that an antibacterial effect is no longer produced by washing for several times.

Furthermore, with regard to the antibacterial fiber disclosed in Patent Document 2, the titanium oxide or zinc oxide to be incorporated has a feature that the specific gravity is heavy compared to the resin component, and the average particle size is very small such as several dozen nanometers (nm). Therefore, the titanium oxide or zinc oxide particles are likely to aggregate and may not be easily mixed and dispersed uniformly in the resin, and furthermore, it is difficult to stably obtain an antibacterial fiber having uniform antibacterial properties and mechanical characteristics.

In addition, there is a problem that most of the antibacterial particles at the resin surface are clathrated by the resin, and it is difficult to obtain sufficient antibacterial properties from an early stage.

Thus, the inventors of the invention conducted a thorough investigation, and as a result, the inventors found that when an antibacterial fiber, as specified in appended claims, containing a thermoplastic resin and antibacterial glass particles, the antibacterial fiber having predetermined cracks on the surface of the fiber and having antibacterial glass particles sandwiched in the cracks, is used, the antibacterial glass particles do not fall off, and the antibacterial fiber exhibits excellent antibacterial properties over a long period of time. Thus, the inventors completed the invention.

That is, an object of the invention is to provide an antibacterial fiber that exhibits excellent antibacterial properties by means of antibacterial glass particles exposed to the surface, and can maintain satisfactory antibacterial properties even after being washed repeatedly for several dozen times as well as in an early stage by having the antibacterial glass particles in a state of being sandwiched in cracks that are formed on the fiber surface, and having the antibacterial glass particles strongly fixed; and an efficient method for producing such an antibacterial fiber.

MEANS FOR SOLVING PROBLEM

According to the invention, there is provided an antibacterial fiber as specified in appended claims containing a thermoplastic resin and antibacterial glass particles, in which the antibacterial fiber has cracks extending along the length direction of the antibacterial fiber on the surface of the antibacterial fiber, and each of the cracks is in a state of having at least one of the antibacterial glass particles sandwiched therein. Thus, the above-mentioned problems can be solved.

More specifically, when a crack that is present on the surface of an antibacterial fiber along the length direction of the antibacterial fiber, has at least one antibacterial glass particle sandwiched therein, the antibacterial glass particle is strongly fixed in a state of being exposed at the surface of the antibacterial fiber, and elimination of the antibacterial particle during washing could be suppressed. As a result, the antibacterial fiber can exhibit excellent antibacterial properties even in a case in which, for example, the antibacterial fiber is washed repeatedly for 50 or more times according to JIS L 1902 as well as in an early stage.

Upon configuring the antibacterial fiber of the invention, the average length of the cracks has a value within the range of 1 to 30 $\mu$m.

When the average length of the cracks is as such, an antibacterial glass particle could be stably fixed to a crack in a state of being exposed, to the extent that the mechanical strength of the antibacterial fiber is not impaired.

Upon configuring the antibacterial fiber of the invention, it is preferable that the volume average particle size of the antibacterial glass particles in a state of being sandwiched in the cracks is adjusted to a value within the range of 0.2 to 5 $\mu$m.

When the volume average particle size of the antibacterial glass particles is controlled as such, the antibacterial glass particles could be fixed in a state of being exposed, to the extent that does not impair the mechanical strength of the antibacterial fiber.

Furthermore, when antibacterial glass particles having such a volume average particle size are used, there is also an effect that when the antibacterial fiber is stretched after spinning, predetermined cracks are likely to be formed stably, starting from the antibacterial glass particles as starting points.

Upon configuring the antibacterial fiber of the invention, it is preferable that the shape of the antibacterial glass particle is a polyhedron.

When the shape of the antibacterial glass particle is controlled as such, at the time of stretching the antibacterial fiber after spinning, predetermined cracks could be easily formed stably, starting from the antibacterial glass particles of the polyhedron as starting points.

Upon configuring the antibacterial fiber of the invention, the antibacterial glass is selected to be of phosphate-based antibacterial glass.

When the glass composition for the antibacterial glass is adjusted as such, the amount of elution of an antibacterial active ingredient (silver ions) in the antibacterial fiber could be easily regulated to a suitable range.

Upon configuring the antibacterial fiber of the invention, it is preferable that when the amount of the thermoplastic resin is designated as 100 parts by weight, the amount of incorporation of the antibacterial glass particles is adjusted to a value within the range of 0.1 to 10 parts by weight.

When the antibacterial fiber is configured as such, the amount of elution of an antibacterial active ingredient (silver ions) in the antibacterial fiber could be easily regulated to a suitable range.

Furthermore, since the antibacterial glass particles could be uniformly dispersed in the resin component while hydrolysis of the thermoplastic resin is effectively suppressed, an excellent antibacterial effect could be stably obtained.

Upon configuring the antibacterial fiber of the invention, it is preferable that the antibacterial fiber has a protective layer on the surface.

When the antibacterial fiber is configured as such, the antibacterial glass particles could be strongly fixed, in a state of being exposed, to the surface of the antibacterial fiber, and in addition, elimination of the antibacterial glass particles during washing could be suppressed.

Furthermore, discoloration of the antibacterial fiber, which is attributed to the production of silver chloride caused by a reaction between silver ions and the like, which are antibacterial active ingredients, and chloride ions, can also be effectively prevented.

Another embodiment of the invention is a method for producing an antibacterial fiber containing a thermoplastic resin and antibacterial glass particles, the antibacterial fiber having cracks extending along the length direction of the antibacterial fiber on the surface of the antibacterial fiber, each of the cracks being in a state of having at least one of the antibacterial glass particles sandwiched therein, the method including the following steps (a) to (d):

(a) a step of preparing a glass melt containing an antibacterial active ingredient and obtaining antibacterial glass particles;

(b) a step of producing an antibacterial resin composition by mixing antibacterial glass particles and a thermoplastic resin;

(c) a step of producing an antibacterial fiber before stretching directly or indirectly from the antibacterial resin component; and

(d) a step of stretching the antibacterial fiber before stretching (as produced in step (c)) and thereby producing an antibacterial fiber having cracks.

More specifically, an antibacterial fiber in which cracks present on the surface of the antibacterial fiber along the length direction of the antibacterial fiber each have at least one antibacterial glass particle sandwiched therein, could be produced simply, easily, and stably.

Therefore, the antibacterial glass particle is strongly fixed, in a state of being exposed, to the surface of the antibacterial fiber, and elimination of the antibacterial glass fiber during washing could be suppressed. As a result, excellent antibacterial properties could be exhibited even in a case in which, for example, the antibacterial fiber is washed repeatedly for 50 or more times according to JIS L 1902 as well as in an early stage.

BRIEF DESCRIPTION OF DRAWINGS

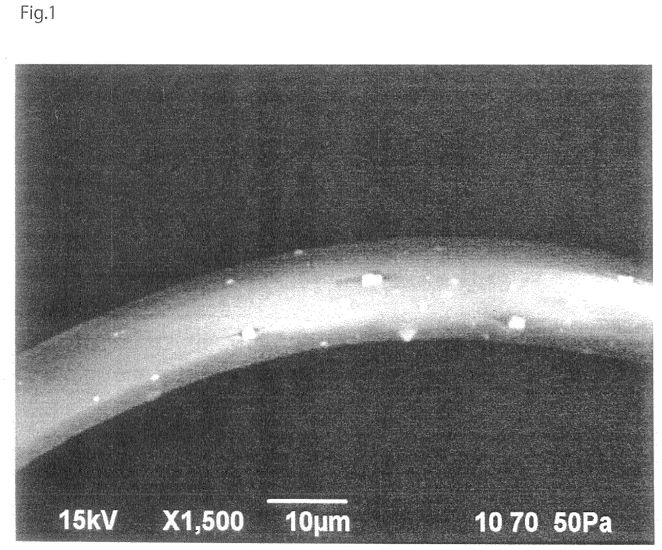

Fig. 1 is an electron microscopic photograph (SEM image, magnification rate: 1,500) of an antibacterial fiber according to the invention;

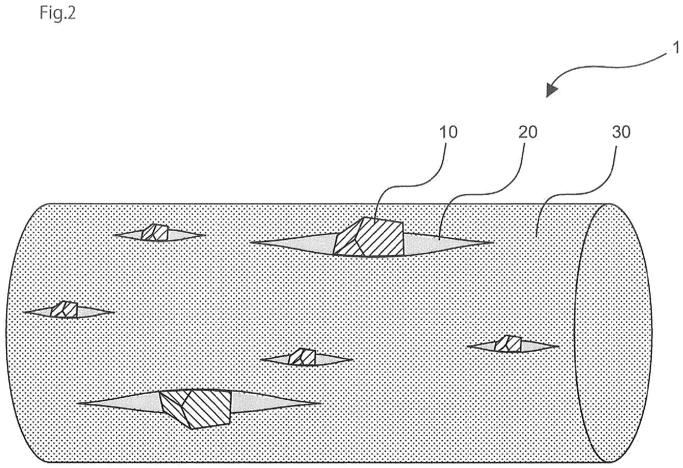

Fig. 2 is a schematic diagram of an antibacterial fiber according to the invention, the antibacterial fiber having cracks on the surface;

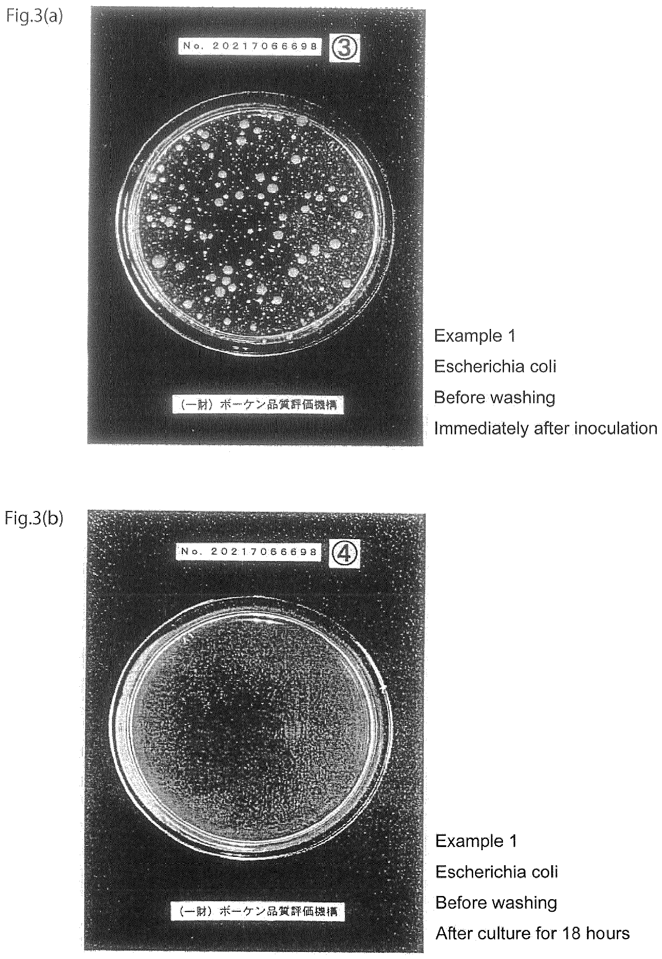

Figs. 3(a) and 3(b) are photographs of an agar medium for a pour plate culture method, which were obtained by culturing Escherichia coli equivalent to one of Example 1, and then inoculating the bacterial cells into a nonwoven fabric of an antibacterial fiber that had not been washed at all, the photographs being taken immediately after the inoculation and 18 hours after the inoculation;

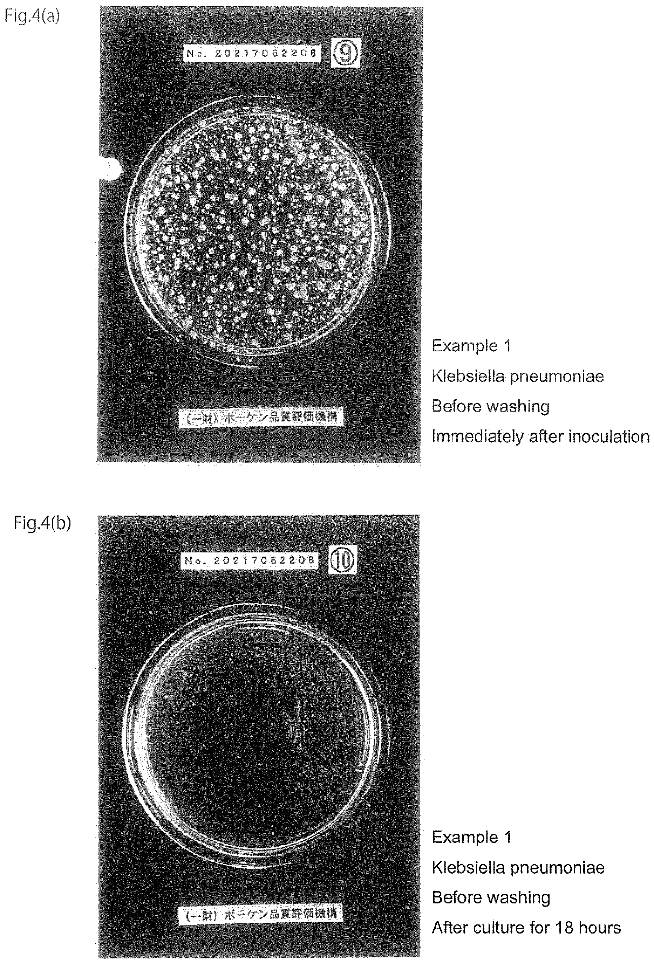

Figs. 4(a) and 4(b) are photographs of an agar medium for a pour plate culture method, which were obtained by culturing Klebsiella pneumoniae equivalent to one of Example 1, and then inoculating the bacterial cells into a nonwoven fabric of an antibacterial fiber that had not been washed at all, the photographs being taken immediately after the inoculation and 18 hours after the inoculation;

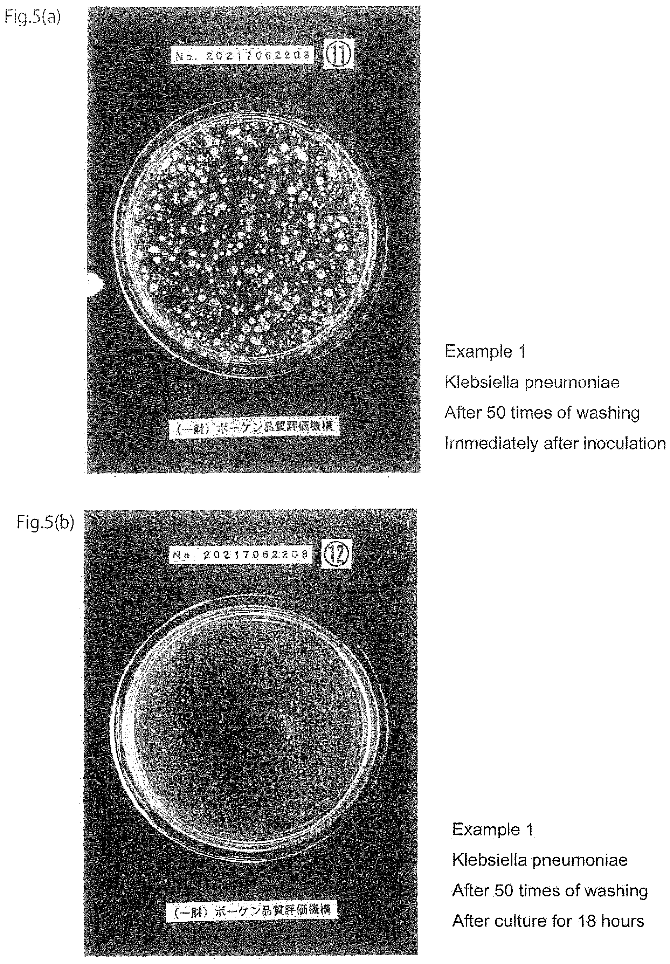

Figs. 5(a) and 5(b) are photographs of an agar medium for a pour plate culture method, which were obtained by culturing Klebsiella pneumoniae equivalent to one of Example 1 and then inoculating the bacterial cells into a nonwoven fabric of an antibacterial fiber that had been washed 50 times, the photographs being taken immediately after the inoculation and 18 hours after the inoculation;

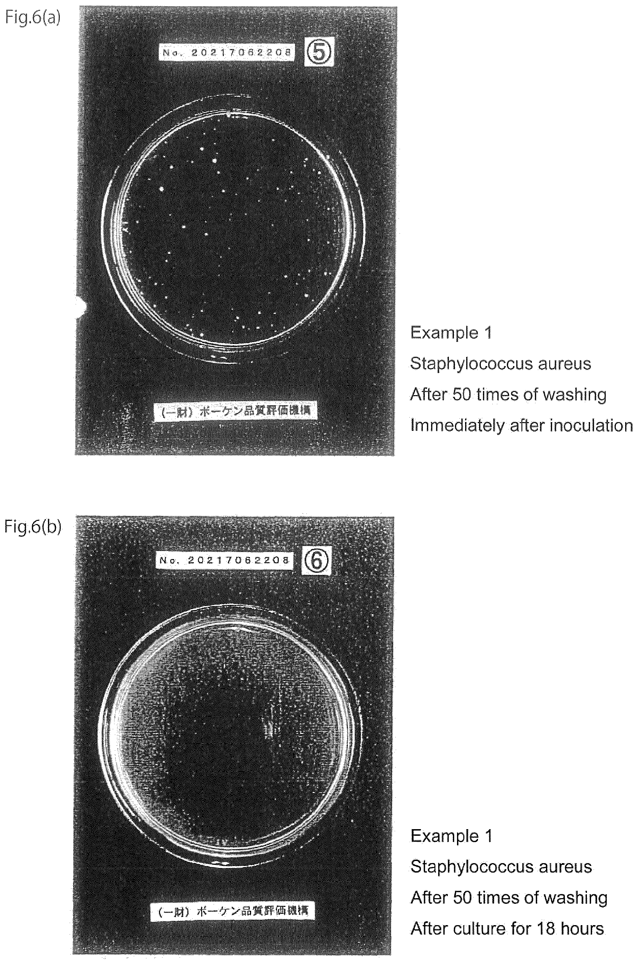

Figs. 6(a) and 6(b) are photographs of an agar medium for a pour plate culture method, which were obtained by culturing Staphylococcus aureus equivalent to one of Example 1 and then inoculating the bacterial cells into a nonwoven fabric of an antibacterial fiber that had been washed 50 times, the photographs being taken immediately after the inoculation and 18 hours after the inoculation;

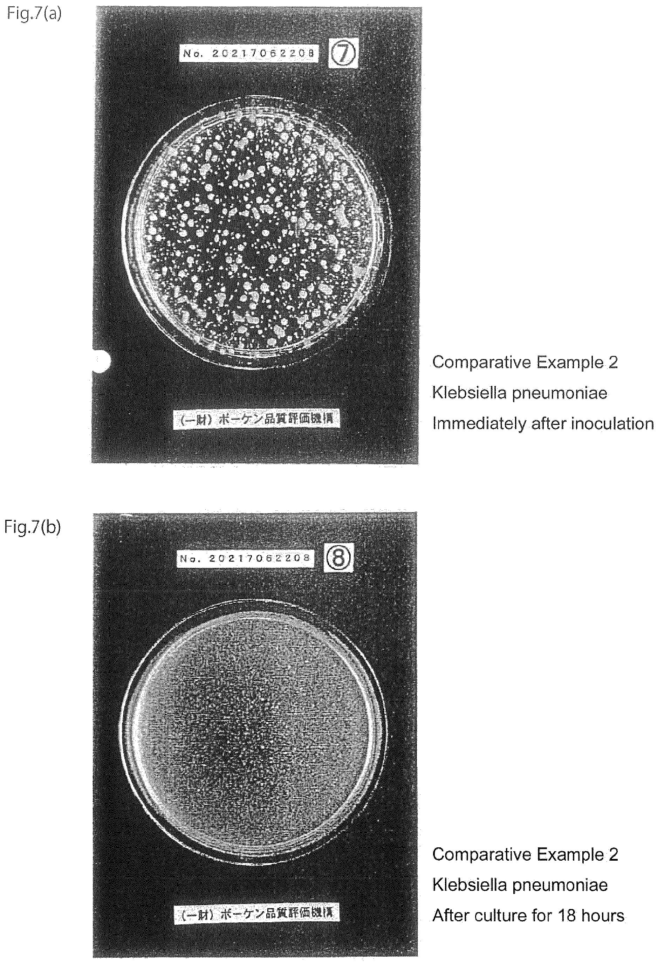

Figs. 7(a) and 7(b) are photographs of an agar medium for a pour plate culture method, which were obtained by culturing Klebsiella pneumoniae equivalent to one of Comparative Example 2 and then inoculating the bacterial cells into a standard cotton cloth, the photographs being taken immediately after the inoculation and 18 hours after the inoculation; and

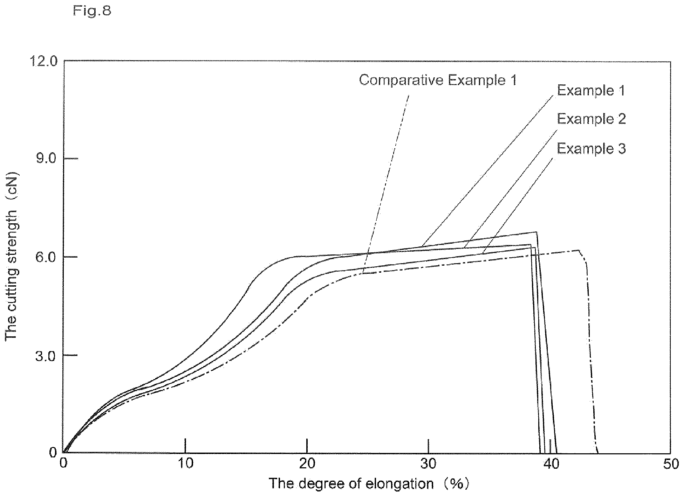

Fig. 8 is a diagram provided in order to describe the relationship between the degree of elongation (%) of the antibacterial fiber according to the invention and the cutting strength (cN).

MODE(S) FOR CARRYING OUT THE INVENTION

[First embodiment]

A first embodiment is an antibacterial fiber containing a thermoplastic resin and antibacterial glass particles as specified in appended claims, in which the antibacterial fiber has cracks extending along the length direction of the antibacterial fiber on the surface of the antibacterial fiber, each of the cracks is in a state of having at least one of the antibacterial glass particles sandwiched therein.

Hereinafter, the first embodiment will be specifically described with reference to the drawings as appropriate.

1. Antibacterial fiber

(1) Form

An antibacterial fiber 1 according to the first embodiment has a feature that the antibacterial fiber 1 has cracks 20 extending along the length direction of the antibacterial fiber on the surface thereof, as shown in the electron microscopic photograph (SEM image) of Fig. 1 and the schematic diagram of Fig. 2.

The crack 20 according to the first embodiment means a fissure produced along the length direction of the fiber surface, and the crack 20 is in a state of having at least one antibacterial glass particle 10 strongly sandwiched therein while exposing the antibacterial glass particle 10 at the surface.

That is, when viewed from a direction perpendicular to the fiber surface, since the antibacterial glass particle 10 is sandwiched in a state of being exposed, usually, the antibacterial fiber has a fissure having the maximum width in the vicinity of the central portion, as a crack.

Furthermore, the crack is a resin fracture produced during a stretching step upon production of the antibacterial fiber, the fracture starting from the antibacterial glass particle included in the antibacterial fiber as a starting point (boundary). However, the strain caused by stretching may be a strain produced from the inside of the antibacterial fiber, or is also preferably a strain produced by an action from the outside.

Further, in a case in which the planar shape of such a crack, that is, the surface of the antibacterial fiber having a crack formed thereon, is viewed in the normal direction (perpendicular direction), usually, it is preferable that the planar shape is an elliptical shape, a rhombic shape, a rectangular shape, or an irregular shape.

Furthermore, in a case in which the antibacterial fiber includes a plurality of cracks, it is preferable that the respective cracks have the same or similar planar shapes; however, it is also preferable that the cracks respectively have different planar shapes.

Furthermore, the cracks can have the average length, average width, and average depth of the cracks respectively adjusted to values within predetermined ranges, by means of the size of the antibacterial glass particles to be sandwiched, and by means of the degree of stretching or the like.

On the other hand, in a case in which the cracks are formed on the surface and the like of the antibacterial fiber, there are concerns about deterioration of the mechanical strength of the fiber itself; however, it has been found that there is no noticeable change in the mechanical strength compared to a fiber having no crack formed thereon, by adjusting the length, width, and depth of the cracks to values within predetermined ranges (see Fig. 8 that will be described below).

Furthermore, in the antibacterial fiber according to the first embodiment, at least one antibacterial glass particle usually exists in a state of being sandwiched in a crack, while being exposed at the resin surface.

That is, the exposed part of the antibacterial glass particle becomes larger compared to conventional antibacterial fibers in which antibacterial glass is embedded in the antibacterial fibers, and by increasing the contact between moisture serving as a medium and antibacterial glass, even when a relatively small amount of antibacterial components are incorporated, elution of an antibacterial active ingredient could be expedited from an early stage.

Therefore, even when water-resistance of the antibacterial glass particle is increased, suitable antibacterial properties could be maintained, and when compared with conventional antibacterial fibers, in a case in which the average particle sizes of the antibacterial glass particles are equal, the antibacterial fiber of the invention can maintain antibacterial properties for a longer period of time.

Furthermore, it is preferable that the antibacterial glass particle according to the first embodiment is a polyhedron having a plurality of angles (for example, 6 to 20) or faces (for example, 6 to 20).

That is, it is because in the case of a polyhedral antibacterial glass particle, when the antibacterial fiber is stretched after spinning, predetermined cracks are likely to be formed stably, starting from the polyhedral antibacterial glass particle as a starting point.

Furthermore, since an antibacterial glass particle has a plurality of angles or faces, the antibacterial glass particle is strongly fixed to a crack, and a state in which the antibacterial glass particle may not be easily eliminated even when an external force works. Therefore, even in a case in which the antibacterial fiber is repeatedly washed, or the like, the antibacterial fiber can exhibit superior antibacterial properties.

Meanwhile, in a case in which repeated washing is performed in the first embodiment, since most of conventional antibacterial fibers are evaluated for antibacterial properties by taking 10 times of washing as the defined number of times according to JIS L 1902, even when washing is performed 10 or more times, it is preferable to exhibit a predetermined antibacterial effect.

Furthermore, it is more preferable that a predetermined antibacterial effect is exhibited even when washing is performed 30 or more times according to similar JIS L 1902, and it is even more preferable that a predetermined antibacterial effect is exhibited even when washing is performed 50 or more times.

However, it may vary depending on the type or use of the antibacterial fiber, usually, when the number of times of washing becomes excessively large, mechanical deterioration of the antibacterial fiber or the proportion of fall of the antibacterial agent may also increase noticeably.

Therefore, the upper limit of the number of times of washing is preferably 3,000 or fewer times, more preferably 1,000 or fewer times, and even more preferably 500 or fewer times.

Furthermore, it is preferable that the volume average particle size (W1) of the antibacterial glass particles to be incorporated into the antibacterial fiber is adjusted to a value within the range of 0.2 to 5 $\mu$m.

The reason for this is that when the volume average particle size (W1) of the antibacterial glass particles is below 0.2 $\mu$m, at the time of stretching after spinning, desired cracks may not be easily formed on the surface of the antibacterial fiber, starting the antibacterial glass particles as starting points.

On the other hand, it is because when the volume average particle size (W1) of the antibacterial glass particles is above 5 $\mu$m, as the cracks become too large, the mechanical strength of the antibacterial fiber to be formed may be lowered.

Therefore, more specifically, it is more preferable that the volume average particle size (W1) of the antibacterial glass particles is adjusted to a value within the range of 0.5 to 4 $\mu$m, and it is even more preferable that the volume average particle size (W1) is adjusted to a value within the range of 1 to 3 $\mu$m.

(2) Average length (L1) of cracks

The average length (L1) of the cracks in the antibacterial fiber of the present embodiment varies depending on the type, use, and the like of the antibacterial fiber and could be changed as appropriate.

According to present invention the average length has a value within the range of 1 to 30 $\mu$m.

The reason for this is that when the average length (L1) of the cracks is below 1 $\mu$m, the cracks may not have the antibacterial glass particles strongly sandwiched therein, and it is because when the average length (L1) of the cracks is above 30.0 $\mu$m, the mechanical strength of the antibacterial fiber may be lowered.

Therefore, it is more preferable that the average length (L1) of the cracks has a value within the range of 3.0 to 25 $\mu$m, and it is even more preferable that the average length (L1) has a value within the range of 5 to 20 $\mu$m.

Meanwhile, regarding the average length (L1) of the cracks, an actual measurement is made at, for example, five points using an electron microscope or vernier calipers, and the average value could be employed.

Furthermore, it is preferable that the ratio (L1/W1) of the average length (L1) of the cracks with respect to the volume average particle size (W1) of the antibacterial glass particles is adjusted to a value within the range of 1.1 to 6.0.

This is because when the ratio of L1/W1 is below 1.1, the exposed part of the antibacterial glass particles becomes small, and the antibacterial active ingredient may not be sufficiently eluted.

Furthermore, it is because when the ratio of L1/W1 has a value of above 6.0, the cracks may not have the antibacterial glass particles strongly sandwiched therein, elimination of the antibacterial glass particles may not be suppressed, and the antibacterial properties may not be maintained in a case in which the antibacterial fiber is repeatedly washed.

Therefore, it is more preferable that the ratio of L1/W1 is adjusted to a value within the range of 1.5 to 5, and it is even more preferable that the ratio of L1/W1 is adjusted to a value within the range of 2 to 4.

(3) Average width (W2) of cracks

The average width (W2) of the cracks in the antibacterial fiber could be appropriately changed depending on the type, use, and the like of the antibacterial fiber, similarly to the adjustment of the average length of the cracks; however, usually, it is preferable that the average width (W2) is adjusted to a value within the range of 0.05 to 2 $\mu$m.

The reason for this is that when the average width (W2) of the cracks is below 0.05 $\mu$m, the exposed part of the antibacterial glass particles becomes small, and the antibacterial active ingredient may not be sufficiently eluted.

On the other hand, it is because when the average width (W2) of the cracks is above 2 $\mu$m, the mechanical strength of the antibacterial fiber may be noticeably impaired, or the antibacterial glass particles may be easily eliminated.

Therefore, it is more preferable that the average width (W2) of the cracks is adjusted to a value within the range of 0.1 to 1.5 $\mu$m, and it is even more preferable that the average width (W2) is adjusted to a value within the range of 0.2 to 1 $\mu$m.

Meanwhile, regarding the average width (W2) of the cracks, an actual measurement is made at, for example, five points using an electron microscope or vernier calipers, and the average value can be employed.

Furthermore, it is preferable that the ratio (W2/W1) of the volume average particle size (W1) of the antibacterial glass particles with respect to the volume average width (W2) of the cracks is adjusted to a value within the range of 5 to 200.

This is because when the ratio of W2/W1 is below 5, the exposed part of the antibacterial glass particles becomes small, and the antibacterial active ingredient may not be sufficiently eluted.

On the other hand, it is because when the ratio of W2/W1 is above 200, the cracks may not have the antibacterial glass particles strongly sandwiched therein, elimination of the antibacterial glass particles may not be suppressed, and the antibacterial properties may not be maintained in a case in which the antibacterial fiber is repeatedly washed.

Therefore, it is preferable that the ratio (W2/W1) of the particle size (W1) of the antibacterial glass particles with respect to the average width (W2) of the cracks is adjusted to a value within the range of 10 to 100, and it is more preferable that the ratio is adjusted to a value within the range of 20 to 50.

(4) Average depth of cracks

The average depth of the cracks according to the present embodiment could be appropriately changed depending on the type, use, and the like of the antibacterial fiber, similarly to the average length (L1) or average width (W2) of the cracks; however, usually, it is preferable that the average depth is adjusted to a value within the range of 0.6 to 3.5 $\mu$m.

The reason for this is that in a case in which the average depth of the cracks is 0.6 $\mu$m or less, the cracks may not have the antibacterial glass particles strongly sandwiched, and the possibility of elimination increases. It is also because in a case in which the depth of the cracks is 3.5 $\mu$m or more, the mechanical strength of the fiber may decrease.

Therefore, it is more preferable that the average depth of the cracks is adjusted to a value within the range of 1.0 to 3.0 $\mu$m, and it is even more preferable that the average depth is adjusted to a value within the range of 1.5 to 2.5 $\mu$m.

Meanwhile, regarding the average depth of the cracks, the sum of the surface roughness, or actual measurement is made at, for example, five points of a cut sample using an electron microscope, and the average value can be employed.

(5) Protective layer

It is preferable that the antibacterial fiber according to the present embodiment has a protective layer on the fiber surface.

The reason for this is that when the antibacterial fiber has a protective layer, the antibacterial glass particles in a state of being sandwiched in the cracks could be prevented from being eliminated from the cracks.

Furthermore, it is because when the antibacterial fiber has a protective layer, production of black-colored silver chloride or the like caused by metal ions such as silver ions, zinc ions, or copper ions, which are antibacterial active ingredients, reacting with chlorine included in a cleaning agent or a bleaching agent, could be prevented, and thereby discoloration of the antibacterial fiber could be prevented thereby.

Here, the component that constitutes the protective layer is not particularly limited; however, for example, at least one of an acryl emulsion, a urethane emulsion, a vinyl acetate emulsion, an epoxy emulsion, and the like is preferred.

Furthermore, in a case in which a protective layer is formed on the surface of the antibacterial fiber, it is preferable that the thickness of the protective layer is adjusted to a value within the range of 0.05 to 3.0 $\mu$m.

The reason for this is that when the thickness of the protective layer is above 3.0 $\mu$m, elution of the antibacterial active ingredient may be interrupted, and antibacterial properties may be impaired.

On the other hand, it is because when the thickness of the protective layer is below 0.05 $\mu$m, the antibacterial glass particles may not be sufficiently protected from chloride ions or the like.

Therefore, it is more preferable that the thickness of the protective layer is adjusted to a value within the range of 0.1 to 2.0 $\mu$m, and it is even more preferable that the thickness is adjusted to a value within the range of 0.5 to 1.5 $\mu$m.

Furthermore, it is also preferable that the protective layer formed on the surface of the antibacterial fiber contains a predetermined amount of an ultraviolet absorber.

The reason for this is that when a protective layer containing an ultraviolet absorber is used, silver ions could be prevented from being reduced into black-colored silver particles by ultraviolet radiation, and the antibacterial fiber could be prevented from being discolored into black color by the silver particles.

Here, the component that could be used as the ultraviolet absorber is not particularly limited; however, for example, conventionally known ultraviolet absorbers such as a benzophenone-based ultraviolet absorber, a salicylic acid-based ultraviolet absorber, a benzotriazolebased ultraviolet absorber, an acrylate-based ultraviolet absorber, and a metal complex salt-based ultraviolet absorber could be used in a predetermined amount.

(6) Tensile strength

Furthermore, regarding the antibacterial fiber according to the present embodiment, from the viewpoint of imparting sufficient strength to a manufactured product obtainable by processing the antibacterial fiber into a nonwoven fabric or the like, it is preferable that the tensile strength (cN/dtex) measured according to JIS L 1015 is adjusted to a value within the range of 3 to 50 cN/dtex.

The reason for this is that when the tensile strength (cN/dtex) of the antibacterial fiber is below 3 cN/dtex, cutting of the fiber may occur during stretching, or during washing of a manufactured product that uses the antibacterial fiber, or the like, the manufactured product may break.

On the other hand, it is because when the tensile strength (cN/dtex) of the antibacterial fiber is above 50 cN/dtex, the flexibility of the antibacterial fiber may not be sufficient, and the use applications may be excessively limited.

Therefore, it is more preferable that the tensile strength (cN/dtex) of the antibacterial fiber is adjusted to a value within the range of 3.5 to 30 cN/dtex, and it is even more preferable that the tensile strength is adjusted to a value within the range of 4.5 to 20 cN/dtex.

Meanwhile, in Fig. 8, a characteristic curve for the antibacterial fiber that uses a polyester resin shown in Fig. 1, in which curve the axis of abscissa represents the degree of elongation (%) of the antibacterial fiber and the axis of ordinate represents the strength (cN/dtex) of antibacterial properties, is indicated.

In such a characteristic curve of Fig. 8, each point where the strength (cN/dtex) begins to decrease is a point where cutting of the fiber caused by stretching occurs.

Also, according to the present embodiment, since predetermined cracks are formed on the surface of the antibacterial fiber, whether sufficient fiber strength is maintained is an important issue; however, it can be seen that there is no significant difference in strength even when a comparison is made between a fiber having no crack and a fiber having cracks.

(7) Rate of dimensional change

Regarding the antibacterial fiber according to the present embodiment, the rate of dimensional change measured according to JIS L 1909 can be adjusted according to the use application.

For example, in the case of using the antibacterial fiber in clothes, from the viewpoint of preventing shrinkage caused by heat produced by a dryer or an iron, the rate of dry heat-induced dimensional change is preferably 3% or less, and more preferably 1% or less.

Furthermore, for a similar reason, the rate of heat-induced dimensional change is preferably 3% or less, and more preferably 1% or less.

(8) Others

The average diameter, apparent fineness, the number of crimps, and the like of the antibacterial fiber are not particularly limited and can be adjusted as appropriate according to the use application and the like of the antibacterial fiber.

For example, it is preferable that the average diameter of the antibacterial fiber is adjusted to a value within the range of 3 to 50 μm.

The reason for this is that when the average diameter of the antibacterial fiber has a value of below 3 μm, the mechanical strength of the antibacterial fiber may not be secured, and the antibacterial fiber may not be produced stably.

On the other hand, it is because when the average diameter of such an antibacterial fiber has a value of above 50 μm, the flexibility of the antibacterial fiber may not be secured, and the product may be applicable to limited use applications.

Therefore, it is more preferable that the average diameter of the antibacterial fiber is adjusted to a value within the range of 8 to 30 μm, and it is even more preferable that the average diameter is adjusted to a value within the range of 10 to 20 μm.

Meanwhile, regarding the average diameter of the antibacterial fiber, the diameter is actually measured at several points (for example, 5 points) using an electron microscope, a micrometer, or vernier calipers, and the average value of the diameters can be employed.

Furthermore, the apparent fineness of the antibacterial fiber can be adjusted as appropriate according to the use application; however, for example, it is preferable that the apparent fineness is adjusted to a value within the range of 0.1 to 50 dtex, more preferably to a value within the range of 0.5 to 30 dtex, and even more preferably to a value within the range of 1 to 10 dtex.

Furthermore, the number of crimps of the antibacterial fiber can be adjusted according to the use application from the viewpoints of impartation of elasticity, tactile sensation, and the like, and as the number of crimps is higher, elasticity becomes richer.

It is desirable that the number of crimps of the antibacterial fiber is usually adjusted to 5 to 90 crimps per 25 mm of the fiber, and when a use application requires elasticity, it is preferable to adjust the number of crimps to 50 to 90.

2. Thermoplastic resin

(1) Main components

(1)-1 Type

In the antibacterial fiber of the first embodiment, a thermoplastic resin is used as a main component of the resin that constitutes the antibacterial fiber.

The type of such a thermoplastic resin is not particularly limited; however, it is preferable that the thermoplastic resin is at least one of a polyester resin, a polyamide resin, a polyurethane resin, a polyolefin resin (including a polyacrylic resin), a rayon resin, a polyvinyl acetate-based resin, a polyvinyl chloride-based resin, a cellulose-based resin, and a polyacetal resin.

For example, it is because when a polyester resin is used, an antibacterial fiber having high mechanical strength, durability, and heat resistance and also having excellent flexibility and processability could be obtained at relatively low cost.

Furthermore, it is because when a polyamide resin is used, an antibacterial fiber having high mechanical strength, durability, and heat resistance and also having hygroscopic properties could be obtained at relatively low cost.

Furthermore, it is because when a polyurethane resin is used, an antibacterial fiber having high durability and excellent stretchability could be obtained.

Furthermore, it is because when a polyolefin resin (including a polyacrylic resin) is used, an antibacterial fiber having satisfactory transparency and processability could be obtained at low cost.

Among these thermoplastic resins, more preferred is a polyester resin or a polyamide resin.

That is, a suitable polyester resin may be at least one of a polyethylene terephthalate resin, a polypropylene terephthalate resin, a polybutylene terephthalate resin, a polycyclohexane dimethylene terephthalate resin, and the like, and above all, preferred is a polyethylene terephthalate resin.

Furthermore, a suitable polyamide resin may be at least one of poly-$\varepsilon$-capramide (nylon 6), polytetramethylene adipamide (nylon 46), polyhexamethylene adipamide (nylon 66), polyhexamethylene sebacamide (nylon 610), polyhexamethylene dodecamide (nylon 612), polyundecamethylene adipamide (nylon 116), polyundecanamide (nylon 11), polylauramide (nylon 12), polyhexamethylene isophthalamide (nylon 61), polyhexamethylene terephthalamide (nylon 6T), polynonamethylene terephthalamide (nylon 9T), and polymethaxylylene adipamide (nylon MXD6), and above all, preferred is poly-$\varepsilon$-capramide (nylon 6) or polyhexamethylene adipamide (nylon 66).

The reason why a polyethylene terephthalate resin is suitable is that since a polyethylene terephthalate resin has low crystallinity compared to a polybutylene terephthalate resin and the like, the thermoplastic resin composition could be stably processed into an antibacterial fiber, an antibacterial film, or the like, which are required to have excellent flexibility.

More specifically, it is because a polyethylene terephthalate resin has a feature that the rate of crystallization is low compared to a polybutylene terephthalate resin, crystallization does not proceed when the temperature is not high, and the strength is increased by heat treatment and stretching treatment.

Furthermore, when a polyethylene terephthalate resin is used, the antibacterial fiber has high transparency as well as excellent heat resistance and practical strength and also has excellent recyclability, and therefore, it is also advantageous in the economic efficiency.

More specifically, for example, as in the case of PET bottles, plastic products formed from a polyethylene terephthalate resin are currently distributed in large quantities and are very cheap compared to other resin materials.

Furthermore, when a polyethylene terephthalate resin is used, as is obvious from the current situation of actively implementing recycling, reutilization is easy compared to other resin materials. Therefore, this makes the polyethylene terephthalate resin as a cheaper resin material.

The polyethylene terephthalate resin may also be a copolymerized polyester containing other copolymerized components.

Furthermore, when poly-$\varepsilon$-capramide (nylon 6) or polyhexamethylene adipamide (nylon 66), which are polyamide resins, is used, the physical properties change depending on the degree of crystallization, and therefore, the tensile strength, bending strength, compression strength, and the like could be adjusted according to the use application.

Furthermore, in addition to having abrasion-resistance and chemical resistance, since the polyamide resins contain amide groups, the polyamide resins have relatively high water absorption properties, the antibacterial glass particles could be more suitably brought into contact with moisture, and antibacterial components could be effectively released by melting the antibacterial glass.

Therefore, as a polyethylene terephthalate resin or a polyamide resin is used as a main component, crystallization of the thermoplastic resin composition in the process of producing and molding antibacterial fibers could be effectively suppressed, and thereby the thermoplastic resin composition could be stably processed into antibacterial fibers and the like that are appropriate for woven fabrics or nonwoven fabrics.

(1)-2 Number average molecular weight

When the thermoplastic resin as a main component is a condensed resin such as a polyethylene terephthalate resin or a polyamide resin, it is preferable that the number average molecular weights (Mn) of those resins are adjusted to values within the range of 10,000 to 80,000.

The reason for this is that when the number average molecular weight of the condensed resin is adjusted to a value within such a range, compatibility of the thermoplastic resin that will be described below with a resin used as a mixing resin could be enhanced, hydrolysis of the resin could be effectively suppressed, and the antibacterial glass could be dispersed more uniformly.

Therefore, it is more preferable that the number average molecular weight of the condensed resin is adjusted to a value within the range of 20,000 to 60,000, and even more preferably adjusted to a value within the range of 30,000 to 50,000.

Meanwhile, when the thermoplastic resin as a main component is a non-condensed resin such as a polypropylene resin, it is preferable that the number average molecular weight of the resin is adjusted to a value within the range of 100,000 to 1,000,000, more preferably to a value within the range of 200,000 to 800,000, and even more preferably to a value within the range of 300,000 to 600,000.

(1)-3 Melting point

Furthermore, it is preferable that the melting point of a crystalline resin as a main component is adjusted to a value within the range of 150°C to 350°C.

The reason for this is that when the melting point is 150°C or higher, the mechanical characteristics such as tensile strength and tear strength of the thermoplastic resin composition could be sufficiently secured, and since appropriate viscosity is obtained when the thermoplastic resin composition is heated and melted, appropriate processability is obtained.

On the other hand, it is because when the melting point is 350°C or lower, moldability of the thermoplastic resin composition is satisfactory, and the crystalline resin could be easily mixed with resin components other than the thermoplastic resin that will be described below.

Therefore, it is more preferable that the melting point of a crystalline resin as a main component is adjusted to a value within the range of 200°C to 300°C, and even more preferably to a value within the range of 230°C to 270°C.

Meanwhile, the melting point of a resin can be measured according to ISO 3146.

(1)-4 Amount of incorporation

Furthermore, in a case in which a thermoplastic resin is used as a mixing resin as will be described below, it is preferable that the amount of incorporation of the resin as a main component is adjusted to a value within the range of 80 to 99.4 parts by weight when the total amount of the thermoplastic resin composition is designated as 100 parts by weight.

The reason for this is that when the amount of incorporation of the resin as a main component is adjusted to a value within such a range, hydrolysis of the resin could be effectively suppressed, and the thermoplastic resin composition could be easily processed into an antibacterial fiber or an antibacterial film.

Therefore, it is more preferable that the amount of incorporation of the resin as a main component is adjusted to a value within the range of 85 to 99 parts by weight, and even more preferably to a value within the range of 90 to 98 parts by weight, when the total amount of the antibacterial resin composition is designated as 100 parts by weight.

(2) Mixing resin

(2)-1 Type

In a case in which a polyethylene terephthalate resin is used as a main component, it is preferable that the thermoplastic resin according to the first embodiment is prepared as a mixing resin including a polybutylene terephthalate resin as another resin component.

The reason for this is that when a polybutylene terephthalate resin having excellent hydrolysis resistance compared to a polyethylene terephthalate resin is included, a polyethylene terephthalate resin being hydrolyzed due to the moisture included in the antibacterial glass could be effectively suppressed at the time of heating and melting of the thermoplastic resin during the production and molding of the antibacterial fiber.

More specifically, since a polybutylene terephthalate resin has high oleophilicity compared to a polyethylene terephthalate resin and has a smaller number of ester bonds contained per unit weight, it is thought that the polybutylene terephthalate resin does not easily undergo hydrolysis.

Therefore, when a polybutylene terephthalate resin is included, hydrolysis of the polyethylene terephthalate resin as a main component could be effectively suppressed, dispersibility of the antibacterial glass is excellent, and an inexpensive thermoplastic resin could be obtained.

That is, when a predetermined amount of antibacterial glass particles are first mixed into a polybutylene terephthalate resin, thereby a masterbatch including antibacterial glass particles at a relatively high concentration is obtained, and then a polyethylene terephthalate resin is mixed thereinto, an antibacterial resin composition having a predetermined mixing ratio could be finally obtained while hydrolysis of the polyethylene terephthalate resin is suppressed.

Furthermore, the polybutylene terephthalate resin according to the first embodiment basically refers to a polymer obtainable by a polycondensation reaction between terephthalic acid or an ester-forming derivative thereof as an acid component and 1,4-butanediol or an ester-forming derivative thereof as a glycol component.

However, in a case in which the total amount of the acid component is designated as 100 mol%, another acid component may also be included as long as the amount has a value within the range of 20 mol% or less.

(2)-2 Amount of incorporation

Furthermore, it is preferable that the amount of incorporation of a polybutylene terephthalate resin is adjusted to a value within the range of 0.5 to 25 parts by weight with respect to 100 parts by weight of a polyethylene terephthalate resin.

The reason for this is that when the amount of incorporation of the polybutylene terephthalate resin is adjusted to a value within such a range, a thermoplastic resin having hydrolysis resistance and having excellent dispersing properties for the antibacterial glass could be obtained, while a polyethylene terephthalate resin that could be processed into an antibacterial fiber or an antibacterial film is used as a main component.

Therefore, more specifically, it is more preferable that the amount of incorporation of the polybutylene terephthalate resin is adjusted to a value within the range of 2 to 15 parts by weight, and even more preferably to a value within the range of 3 to 10 parts by weight, with respect to 100 parts by weight of the polyethylene terephthalate resin.

3. Antibacterial glass

The antibacterial fiber according to the first embodiment as specified in appended claims contains antibacterial glass particles, and the antibacterial glass particles contain silver ions as an antibacterial active ingredient.

The reason for this is that when such antibacterial glass particles are used, the antibacterial glass particles are highly safe and maintain antibacterial action for a long period of time, and since the antibacterial glass particles also have high heat resistance, the antibacterial glass particles have excellent adaptability as an antibacterial agent that is to be incorporated into the antibacterial fiber.

(1) Composition

Furthermore, the antibacterial glass particles according to the first embodiment are formed from phosphate-based antibacterial glass.

The reason for this is that when phosphate-based antibacterial glass is used, the amount of elution of an antibacterial active ingredient such as silver ions in the antibacterial fiber can be regulated to a suitable range, while discoloration of the thermoplastic resin is inhibited.

(1)-1 Glass composition 1

Furthermore, it is preferable that the glass composition of the phosphate-based antibacterial glass includes $Ag_2O$, ZnO, CaO, $B_2O_3$, and $P_2O_5$, and when the total amount is designated as 100% by weight, the amount of incorporation of $Ag_2O$ is adjusted to a value within the range of 0.2% to 5% by weight, the amount of incorporation of ZnO is adjusted to a value within the range of 2% to 60% by weight, the amount of incorporation of CaO is adjusted to a value within the range of 0.1% to 15% by weight, the amount of incorporation of $B_2O_3$ is adjusted to a value within the range of 0.1% to 15% by weight, the amount of incorporation of $P_2O_5$ is adjusted to a value within the range of 30% to 80% by weight, and the weight ratio of ZnO/CaO is adjusted to a value within the range of 1.1 to 15.

Here, $Ag_2O$ is an essential constituent component as an antibacterial ion-releasing substance in glass composition 1, and since the glass composition includes $Ag_2O$, when glass components are melted, silver ions could be slowly eluted at a predetermined rate, and thus excellent antibacterial properties could be exhibited for a long period of time.

Furthermore, it is preferable that the amount of incorporation of $Ag_2O$ is adjusted to a value within the range of 0.2% to 6% by weight.

The reason for this is that the amount of incorporation of $Ag_2O$ has a value of 0.2% by weight or more, sufficient antibacterial properties could be exhibited.

On the other hand, it is because when the amount of incorporation of $Ag_2O$ is 6% by weight or less, the antibacterial glass may not be easily discolored, and since the cost can be suppressed, it is economically advantageous.

Therefore, it is more preferable that the amount of incorporation of $Ag_2O$ is adjusted to a value within the range of 0.5% to 4% by weight, and it is even more preferable that the amount of incorporation is adjusted to a value within the range of 0.8% to 3.5% by weight.

Furthermore, $P_2O_5$ is an essential constituent component in glass composition 1 and basically functions as a network-forming oxide; however, in addition to that, $P_2O_5$ is also involved in a function of improving the transparency of the antibacterial glass and uniform release properties for silver ions.

Regarding the amount of incorporation of $P_2O_5$, it is preferable that the amount of incorporation is adjusted to a value within the range of 30% to 80% by weight.

The reason for this is that when the amount of incorporation of $P_2O_5$ as such is 30% by weight or more, the transparency of the antibacterial glass is not easily lowered, and uniform release properties for silver ions and physical strength could be easily secured.

On the other hand, it is because when the amount of incorporation of $P_2O_5$ as such is 80% by weight or less, the antibacterial glass does not easily undergo yellowing, and since curability is improved, physical strength could be easily secured.

Therefore, it is more preferable that the amount of incorporation of $P_2O_5$ is adjusted to a value within the range of 35% to 75% by weight, and it is even more preferable that the amount of incorporation is adjusted to a value within the range of 40% to 70% by weight.

Furthermore, ZnO is an essential constituent component for glass composition 1, has a function as a network-modifying oxide for the antibacterial glass, prevents yellowing, and also has a function of enhancing the antibacterial properties.

Regarding the amount of incorporation of ZnO, it is preferable that the amount of incorporation is adjusted to a value within the range of 2% to 60% by weight with respect to the total amount.

The reason for this is that when the amount of incorporation of ZnO as such has a value of 2% by weight or more, a yellowing preventing effect and an effect of enhancing antibacterial properties are easily exhibited. On the other hand, it is because when the amount of incorporation of ZnO as such has a value of 60% by weight or less, the transparency of the antibacterial glass is not easily lowered, and mechanical strength could be easily secured.

Therefore, it is more preferable that the amount of incorporation of ZnO is adjusted to a value within the range of 5% to 50% by weight, and it is even more preferable that the amount of incorporation is adjusted to a value within the range of 10% to 40% by weight.

Furthermore, it is preferable that the amount of incorporation of ZnO is determined by taking the amount of incorporation of CaO that will be described below into consideration.

Specifically, it is preferable that the weight ratio represented by ZnO/CaO is adjusted to a value within the range of 1.1 to 15.

The reason for this is that when such a weight ratio has a value of 1.1 or more, yellowing of the antibacterial glass could be efficiently prevented. On the other hand, it is because when such a weight ratio is 15 or less, the antibacterial glass does not easily undergo clouding or yellowing.

Therefore, it is more preferable that the weight ratio represented by ZnO/CaO is adjusted to a value within the range of 2.0 to 12, and it is even more preferable that the weight ratio is adjusted to a value within the range of 3.0 to 10.

CaO is an essential constituent component for glass composition 1, and CaO basically accomplishes a function as a network-modifying oxide, and also has a function of lowering the heating temperature at the time of producing antibacterial glass or preventing yellowing, together with ZnO.

It is preferable that the amount of incorporation of CaO is adjusted to a value within the range of 0.1% to 15% by weight.

The reason for this is that when the amount of incorporation of CaO as such is 0.1% by weight or more, a yellowing preventing function and an effect of lowering the melting temperature are easily exhibited. On the other hand, it is because when the amount of incorporation of CaO as such is 15% by weight or less, deterioration of the transparency of the antibacterial glass could be easily suppressed.

Therefore, it is preferable that the amount of incorporation of CaO is adjusted to a value within the range of 1.0% to 12% by weight, and it is more preferable that the amount of incorporation is adjusted to a value within the range of 3.0% to 10% by weight.

Furthermore, $B_2O_3$ is an essential constituent component for glass composition 1, and basically accomplishes a function as a network-forming oxide. However, in addition to that, in the invention, $B_2O_3$ is a component that is involved in the transparency-improving function of the antibacterial glass as well as uniform release properties for silver ions.

It is preferable that the amount of incorporation of $B_2O_3$ is adjusted to a value within the range of 0.1% to 15% by weight with respect to the total amount.

The reason for this is that when the amount of incorporation of $B_2O_3$ as such is 0.1% by weight or more, transparency of the antibacterial glass could be sufficiently secured, and uniform release properties for silver ions and mechanical strength could be secured easily.

On the other hand, it is because when the amount of incorporation of $B_2O_3$ as such is 15% by weight or less, yellowing of the antibacterial glass is easily suppressed, curability is improved, and mechanical strength could be easily secured.

Therefore, it is preferable that the amount of incorporation of $B_2O_3$ is adjusted to a value within the range of 1.0% to 12% by weight, and it is more preferable that the amount of incorporation is adjusted to a value within the range of 3.0% to 10% by weight.

Meanwhile, it is also preferable that $CeO_2$, MgO, $Na_2O$, $Al_2O_3$, $K_2O$, $SiO_2$, BaO, and the like as optional constituent components for glass composition 1 are added in predetermined amounts within the scope of the purpose of the invention.

(1)-2 Glass composition 2

Furthermore, it is preferable that the glass composition of the phosphate-based antibacterial glass includes $Ag_2O$, CaO, $B_2O_3$, and $P_2O_5$, while ZnO is not substantially included therein, and when the total amount is designated as 100% by weight, the amount of incorporation of $Ag_2O$ is adjusted to a value within the range of 0.2% to 5% by weight, the amount of incorporation of CaO is adjusted to a value within the range of 15% to 50% by weight, the amount of incorporation of $B_2O_3$ is adjusted to a value within the range of 0.1% to 15% by weight, the amount of incorporation of $P_2O_5$ is adjusted to a value within the range of 30% to 80% by weight, and the weight ratio of $CaO/Ag_2O$ is adjusted to a value within the range of 5 to 15.

Here, with regard to $Ag_2O$, matters similar to those for the glass composition 1 could be applied.

Therefore, it is preferable that the amount of incorporation of $Ag_2O$ is adjusted to a value within the range of 0.2% to 6% by weight, more preferably to a value within the range of 0.5% to 4.0% by weight, and even more preferably to a value within the range of 0.8% to 3.5% by weight, with respect to the total amount.

Furthermore, by using CaO for the antibacterial glass, the antibacterial glass can basically accomplish a function as a network-modifying oxide and can also lower the heating temperature at the time of producing antibacterial glass or exhibit a yellowing preventing function.

That is, it is preferable that the amount of incorporation of CaO is adjusted to a value within the range of 15% to 50% by weight with respect to the total amount.

The reason for this is that when the amount of incorporation of CaO as such is 15% by weight or more, even though the antibacterial glass substantially does not contain ZnO, a yellowing preventing function and an effect of lowering the melting temperature are exhibited. On the other hand, it is because when the amount of incorporation of CaO as such is 50% by weight or less, transparency of the antibacterial glass could be sufficiently secured.

Therefore, it is more preferable that the amount of incorporation of CaO is adjusted to a value within the range of 20% to 45% by weight, and it is even more preferable that the amount of incorporation is adjusted to a value within the range of 25% to 40% by weight.

Meanwhile, it is preferable that the amount of incorporation of CaO is determined by taking the amount of incorporation of $Ag_2O$ into consideration, and specifically, it is preferable that the weight ratio represented by $CaO/Ag_2O$ is adjusted to a value within the range of 5 to 15.

More specifically, it is more preferable that the weight ratio represented by $CaO/Ag_2O$ is adjusted to a value within the range of 6 to 13, and it is even more preferable that the weight ratio is adjusted to a value within the range of 8 to 11.

Furthermore, with regard to $B_2O_3$ and $P_2O_5$, matters similar to those for the glass composition 1 could be applied.

Also, it is preferable that components such as $CeO_2$, MgO, $Na_2O$, $Al_2O_3$, $K_2O$, $SiO_2$, and BaO are added in predetermined amounts as optional constituent components similarly to glass composition 1, within the scope of the purpose of the invention.

(1)-3 Glass composition 3 (not according to present invention)

The glass composition of borosilicate glass includes $B_2O_3$, $SiO_2$, $Ag_2O$, and alkali metal oxides, and when the total amount is designated as 100% by weight, the amount of incorporation of $B_2O_3$ is adjusted to a value within the range of 30% to 60% by weight, the amount of incorporation of $SiO_2$ is adjusted to a value within the range of 30% to 60% by weight, the amount of incorporation of Ag$_2$O is adjusted to a value within the range of 0.2% to 5% by weight, the amount of incorporation of the alkali metal oxides is adjusted to a value within the range of 5% to 20% by weight, the amount of incorporation of Al$_2$O$_3$ is adjusted to a value within the range of 0.1% to 2% by weight, and in a case in which the total amount is below 100% by weight, other glass components (alkaline earth metal oxides, CeO$_2$, CoO, and the like) are included as balance components at a value within the range of 0.1% to 33% by weight.

Here, in the mixing composition of an alkaline antibacterial glass, B$_2$O$_3$ basically accomplishes a function as a network-forming oxide; however, in addition to that, B$_2$O$_3$ is also involved in a function of improving transparency and uniform release properties for silver ions.

Furthermore, SiO$_2$ accomplishes a function as a network-forming oxide in an antibacterial glass and also has a function of preventing yellowing.

Furthermore, Ag$_2$O is an essential constituent component for an antibacterial glass, and as the glass components are melted and thereby silver ions are eluted, excellent antibacterial properties could be exhibited for a long period of time.

Alkali metal oxides, for example, Na$_2$O and K$_2$O, basically accomplish a function as network-modifying oxides, also exhibit a function of adjusting the melt characteristics of antibacterial glass, reduce the water-resistance of antibacterial glass, and can thereby adjust the amount of elution of silver ions from an antibacterial glass.

Regarding alkaline earth metal oxides, for example, when MgO or CaO is added, a function as network-modifying oxides could be accomplished, and similarly to alkali metal oxides, a function of improving the transparency of the antibacterial glass and a function of adjusting the melting temperature could be exhibited.

In addition to that, when CeO$_2$, Al$_2$O$_3$, and the like are separately added, discoloration properties against electron beams and transparency, or mechanical strength can also be enhanced.

(2) Volume average particle size

Furthermore, it is preferable that the volume average particle size (volume average primary particle size, D50) of the antibacterial glass particles is adjusted to a value within the range of 0.05 to 5.0 μm.

The reason for this is that when the volume average particle size of the antibacterial glass particles is adjusted to a value within such a range, the antibacterial glass particles could be dispersed more uniformly, and it is because a thermoplastic resin containing antibacterial glass particles could be processed into an antibacterial fiber or an antibacterial film more stably.

That is, it is because when the volume average particle size of the antibacterial glass particles is 0.05 μm or more, cracks are likely to be formed at the time of stretching the antibacterial fiber after spinning, mixing and dispersing into the resin component is facilitated, and light scattering is easily suppressed, or transparency is easily secured.

On the other hand, it is because when the volume average particle size of the antibacterial glass particles is 5.0 μm or less, since cracks formed upon stretching do not become excessively large, and the mechanical strength of the antibacterial fiber could be easily secured.

Therefore, more specifically, it is more preferable that the volume average particle size of the antibacterial glass particles is adjusted to a value within the range of 1 to 4 μm, and it is even more preferable that the volume average particle size is adjusted to a value within the range of 1.5 to 3.0 μm.

Meanwhile, the volume average particle size (D50) of the antibacterial glass particles can be calculated from the particle size distribution obtainable using a laser type particle counter (according to JIS Z 8852-1) or a sedimentation type particle size distribution meter, or from the particle size distribution obtainable by performing an imaging treatment based on electron microscopic photographs of the antibacterial glass.

(3) Specific surface area

Furthermore, it is preferable that the specific surface area of the antibacterial glass particles is adjusted to a value within the range of 10,000 to 300,000 cm$^2$/cm$^3$.

The reason for this is that when such a specific surface area has a value of 10,000 cm$^2$/cm$^3$ or greater, mixing and dispersing into the resin components or handling is facilitated, and in the case of producing an antibacterial fiber, surface smoothness and mechanical strength could be easily secured.

On the other hand, it is because when such a specific surface area is 300,000 cm$^2$/cm$^3$ or less, mixing and dispersing into the resin component is facilitated, light scattering does not easily occur, and deterioration of the transparency could be suppressed.

More specifically, it is more preferable that the specific surface area of the antibacterial glass particles is adjusted to a value within the range of 15,000 to 200,000 cm$^2$/cm$^3$, and it is even more preferable that the specific surface area is adjusted to a value within the range of 18,000 to 150,000 cm$^2$/cm$^3$.

Meanwhile, the specific surface area (cm$^2$/cm$^3$) of the antibacterial glass particles can be determined from the results of particle size distribution measurement, and under an assumption that the antibacterial glass has a spherical shape, the specific surface area can be calculated as a surface area (cm$^2$) per unit volume (cm$^3$) from the actually measured data of the particle size distribution.

(4) Shape

Furthermore, it is preferable that the shape of the antibacterial glass particles is a polyhedron, that is, a polyhedron configured to have a plurality of angles or faces, for example, a polyhedron configured to have 6 to 20 faces.

The reason for this is that when the shape of the antibacterial glass particles is a polyhedron as described above, unlike spherical-shaped antibacterial glass particles, light can easily advance in-plane in a fixed direction. It is also because since light scattering attributed to the antibacterial glass could be effectively prevented, transparency of the antibacterial glass could be enhanced.

Furthermore, when the antibacterial glass particle is a polyhedron as such, mixing and dispersing into the resin component is facilitated, and particularly in a case in which an antibacterial fiber is produced using a spinning apparatus or the like, the antibacterial fiber has a feature that the antibacterial glass particles could be easily oriented in a fixed direction, and cracks are likely to be formed on the fiber surface.

Therefore, the antibacterial glass could be easily dispersed uniformly in the resin component, and at the same time, scattering of light by the antibacterial glass in the resin component is effectively prevented so that excellent transparency could be exhibited.

Furthermore, when the shape of the antibacterial glass is a polyhedron as such, external additives that will be described below can easily adhere thereto, and the antibacterial glass may not easily reaggregate during production or during use or the like. Therefore, control of the volume average particle size and the variation during the production of the antibacterial glass is facilitated.

Furthermore, since the frictional resistance increases compared to antibacterial glass having a spherical shape or the like, when the antibacterial glass is sandwiched in a crack, the glass particle is fixed more strongly. Therefore, elimination caused by an external force exerted thereto, such as washing, could be suppressed. Thus, even in a case in which the antibacterial fiber is repeatedly washed, suitable antibacterial properties could be imparted to the antibacterial fiber.

(5) Surface treatment

It is preferable that the surface of the antibacterial glass particles is treated with a polyorganosiloxanesilicone resin, a silane coupling agent, a titanate coupling agent, an aluminate coupling agent, or the like.

Thereby, the adhesive force between the antibacterial glass particles and the thermoplastic resin could be adjusted.

(6) External additives

Furthermore, it is also preferable that aggregated silica particles (dry silica or wet silica) are externally added to the antibacterial glass particles.

As long as aggregated silica particles constitute a main component, combination thereof with one of titanium oxide, zinc oxide, aluminum oxide, zirconium oxide, calcium carbonate, shirasu balloon, quartz particles, glass balloon, and the like, or with two or more kinds thereof is also preferable.

Particularly, among these, aggregated silica particles (dry silica or wet silica) or colloidal silica, which is an aqueous dispersion of the aggregated silica particles, is a preferred external additive because these materials have a small number average primary particle size and highly excellent dispersibility in the antibacterial glass.

That is, it is because since such aggregated silica particles are dispersed while the aggregated state becomes loose, the silica particles adhere to the periphery of the antibacterial glass and can uniformly disperse the antibacterial glass even in the resin component.

Furthermore, it is preferable that the number average secondary particle size of the aggregated silica as an external additive is adjusted to a value within the range of 0.8 to 15 μm.

The reason for this is that when the number average secondary particle size of such an external additive has a value of 0.8 μm or more, dispersibility of the antibacterial glass particle 10 is improved, light scattering is suppressed, and transparency could be secured.

On the other hand, it is because when the number average secondary particle size of such an external additive is 15 μm or less, mixing and dispersing into the resin component or handling is facilitated, and in a case in which an antibacterial fiber or an antibacterial film is produced, surface smoothness, transparency, and mechanical strength could be easily secured.

Therefore, it is more preferable that the number average secondary particle size of the external additive is adjusted to a value within the range of 5 to 12 $\mu$m, and it is even more preferable that the number average secondary particle size is adjusted to a value within the range of 6 to 10 $\mu$m.

Meanwhile, the number average secondary particle size of the external additive can be measured using a laser type particle counter (according to JIS Z 8852-1) or a sedimentation type particle size distribution meter.

Furthermore, the number average secondary particle size of the external additive can be calculated by subjecting an electron microscopic photograph of these to image processing.

Further, in a case in which the external additive is basically aggregated, it is preferable that the number average primary particle size in a state in which the aggregates are loosened is adjusted to a value within the range of 0.005 to 0.5 $\mu$m.

The reason for this is that when the number average primary particle size of the external additive has a value of 0.005 $\mu$m or greater, an effect of enhancing the dispersibility of the antibacterial glass could be easily obtained, light scattering is suppressed, and deterioration of the transparency could be suppressed.

On the other hand, it is because when the number average primary particle size of the external additive is 0.5 $\mu$m or less, similarly, an effect of enhancing the dispersibility of the antibacterial glass could be easily obtained, mixing and dispersing into the resin component or handling is similarly facilitated when an antibacterial fiber or an antibacterial film is produced, and the surface smoothness, transparency, and mechanical strength could be sufficiently secured.

Therefore, it is more preferable that the number average primary particle size of the external additive is adjusted to a value within the range of 0.01 to 0.2 $\mu$m, and it is even more preferable that the number average primary particle size is adjusted to a value within the range of 0.02 to 0.1 $\mu$m.

Meanwhile, the number average primary particle size of the external additive can be measured by a method similar to that used for the number average secondary particle size.

Furthermore, it is preferable that the amount of addition of aggregated silica as an external additive is adjusted to a value within the range of 0.1 to 50 parts by weight with respect to 100 parts by weight of the antibacterial glass.

The reason for this is that when the amount of addition of the external additive as such has a value of 0.1 parts by weight or more, dispersibility of the antibacterial glass particles is improved.

On the other hand, it is because when the amount of addition of the external additive as such has a value of 50 parts by weight or less, the external additive could be uniformly mixed with the antibacterial glass, and the transparency of the antibacterial resin composition thus obtainable is not easily deteriorated.

Therefore, it is more preferable that the amount of addition of the external additive is adjusted to a value within the range of 0.5 to 30 parts by weight, and even more preferably to a value within the range of 1 to 10 parts by weight, with respect to 100 parts by weight of the antibacterial glass.

(7) Moisture content

Furthermore, even in a case in which the antibacterial glass particles contain moisture, it is preferable that the content of the moisture is adjusted to a value within the range of $1 \times 10^{-4}$ to 5 parts by weight with respect to 100 parts by weight of the solid components of the antibacterial glass particles.

The reason for this is that when the moisture content is adjusted to a value within such a range, at the time of producing a thermoplastic resin composition, hydrolysis of the thermoplastic resin is effectively suppressed even in a case in which a step of drying the antibacterial glass is omitted, and the antibacterial glass particles could be uniformly dispersed.

That is, it is because when such moisture content has a value of $1 \times 10^{-4}$ parts by weight or more, drying is finished without using excessively large drying facilities as the drying facilities for the antibacterial glass particles, the time required for the drying step is not likely to be excessively lengthened, and the economic efficiency is not impaired noticeably.

On the other hand, it is because when such moisture content has a value of 5 parts by weight or less, hydrolysis of the thermoplastic resin mentioned above could be stably suppressed.

Therefore, it is more preferable that the moisture content of the antibacterial glass is adjusted to a value within the range of $1 \times 10^{-3}$ to 1 parts by weight, and even more preferably to a value within the range of $1 \times 10^{-2}$ to $1 \times 10^{-1}$ parts by weight, with respect to 100 parts by weight of the solid components of the antibacterial glass.

Meanwhile, the measurement of the moisture content in the antibacterial glass can be carried out by, for example, a weight loss on heating method at 105°C with an electronic moisture meter, or can also be carried out using a Karl Fischer method.

(8) Amount of incorporation

Furthermore, it is preferable that the amount of incorporation of the antibacterial glass particles is adjusted to a value within the range of 0.1 to 10 parts by weight with respect to 100 parts by weight of the thermoplastic resin described above.

The reason for this is that when the amount of incorporation of the antibacterial glass particles is adjusted to a value within such a range, hydrolysis of the thermoplastic resin is effectively suppressed, the antibacterial glass is uniformly dispersed in the resin component, and an excellent antibacterial effect could be obtained.

That is, it is because when the amount of incorporation of the antibacterial glass particles has a value of 0.1 parts by weight or more, since the absolute amount of the antibacterial glass is sufficient, sufficient antibacterial properties could be imparted to the antibacterial fiber.

On the other hand, it is because when the amount of incorporation of the antibacterial glass particles has a value of 10 parts by weight or less, the amount of moisture contained in the antibacterial glass also increases along with an increase in the amount of incorporation of the antibacterial glass particles, and hydrolysis of the thermoplastic resin could be sufficiently suppressed. Furthermore, the thermoplastic resin could be easily processed into an antibacterial fiber or an antibacterial film.

Therefore, it is more preferable that the amount of incorporation of the antibacterial glass particles is adjusted to a value within the range of 0.15 to 1 part by weight, and even more preferably to a value within the range of 0.2 to 0.5 parts by weight, with respect to 100 parts by weight of a polyethylene terephthalate resin.

Meanwhile, the amount of incorporation of the antibacterial glass particles means, in a case in which the antibacterial glass particles contain moisture, the amount of incorporation including the moisture content.

4. Dispersion aid

Furthermore, it is preferable that the antibacterial fiber according to the first embodiment includes a dispersion aid for the antibacterial glass particles.

The reason for this is that when the antibacterial fiber includes a dispersion aid, the antibacterial glass particles could be dispersed more uniformly.

(1) Type

The type of the dispersion aid is not particularly limited, and for example, an aliphatic amide-based dispersion aid, a hydrocarbon-based dispersion aid, a fatty acid-based dispersion aid, a higher alcohol-based dispersion aid, a metal soap-based dispersion aid, an ester-based dispersion aid, or the like could be used. However, above all, an aliphatic amide-based dispersion aid is particularly preferred.

Aliphatic amide-based dispersion aids are roughly classified into fatty acid amides such as stearic acid amide, oleic acid amide, and erucic acid amide; and alkylene fatty acid amides such as methylenebisstearic acid amide and ethylenebisstearic acid amide. However, it is more preferable to use an alkylene fatty acid amide.

The reason for this is that when an alkylene fatty acid amide is used, the dispersibility of the antibacterial glass could be enhanced without lowering the thermal stability of the antibacterial resin composition, compared to fatty acid amides.

Furthermore, from the viewpoint of having a melting point of 141.5°C to 146.5°C and having excellent stability during molding of the antibacterial fiber, it is particularly preferable to use ethylenebisstearic acid amide among the alkylene fatty acid amides.

(2) Amount of incorporation

It is preferable that the amount of incorporation of the dispersion aid is adjusted to a value within the range of 1 to 20 parts by weight with respect to 100 parts by weight of the antibacterial glass particles.

The reason for this is that when the amount of incorporation of the dispersion aid has a value of 1 part by weight or more, the dispersibility of the antibacterial glass in the antibacterial fiber could be sufficiently enhanced.

On the other hand, it is because when the amount of incorporation of the dispersion aid is 20 parts by weight or less, mechanical characteristics such as tensile strength and tear strength of the antibacterial resin composition could be sufficiently secured, and bleed-out of the dispersion aid from the antibacterial resin composition does not easily occur.

Therefore, it is more preferable that the amount of incorporation of the dispersion aid is adjusted to a value within the range of 3 to 12 parts by weight, and even more preferably to a value within the range of 5 to 8 parts by weight, with respect to 100 parts by weight of the antibacterial glass.

5. Other components

Regarding the antibacterial fiber according to the first embodiment, it is preferable to add additives such as a stabilizer, a mold release agent, a nucleating agent, a filler, a dye, a pigment, an antistatic agent, an oil solution, a lubricating agent, a plasticizer, a sizing agent, an ultraviolet absorber, an antifungal agent, an antiviral agent, a flame retardant, and a flame retardant aid; another resin; an elastomer, and the like as optional components to the antibacterial fiber as necessary, to the extent that does not impair the original purpose.

The method of adding these optional components into the antibacterial fiber is not particularly limited, and for example, it is also preferable to perform the addition by melt kneading the optional components into a thermoplastic resin together with antibacterial glass particles.

6. Form

It is preferable that the antibacterial fiber according to the first embodiment is processed into a cotton form or a sheet-like molded article such as a nonwoven fabric, a knit fabric, a woven fabric, a felt, or a web.

Furthermore, when the antibacterial fiber according to the first embodiment is processed into cotton, a nonwoven fabric, a woven fabric, a knit fabric, a felt, a web, or the like, processing may be carried out using only the antibacterial fiber of the present embodiment; however, it is also preferable that a fiber of another kind and the antibacterial fiber of the present embodiment are subjected to yarn mixing and mixed spinning to be processed into a plied yarn, a covering yarn, or a braided cord.

Examples of the other kind of fiber include synthetic fibers of nylon, polyester, polyurethane, or the like; natural fibers of cotton yarn, silk yarn, wool, or the like; carbon fibers; and glass fibers.

A product obtained by subjecting the antibacterial fiber and another type of fiber to yarn mixing and mixed spinning, and processing the resultant into a plied yarn, a covering yarn, or a braided cord, also has antibacterial properties that are equivalent to those of the antibacterial fiber of the present embodiment, and has an excellent feature that such a product maintains the antibacterial properties even when washing is performed repeatedly under predetermined conditions.

Furthermore, it is also preferable that the antibacterial fiber according to the first embodiment or a processed product such as cotton, a woven fabric, or a knit fabric, which is obtained by processing the antibacterial fiber according to the use application, is further subjected to dyeing or various finish processing (crease resistance, anti-fouling, flame retardance, insectproofing, mildew-proofing, deodorization, moisture absorption, water repellency, calendaring, anti-pilling, and the like).

Thereby, functions other than antibacterial properties could be imparted.

7. Use applications

Among the above-described forms, the use application of the sheet-like molded article is not particularly limited; however, examples include clothes, bedding, interior tools, absorption cloth, packaging materials, miscellaneous goods, and filtration media.

Examples of the clothes include underwear, a shirt, sportswear, an apron, socks, insoles, stockings, tights, tabi socks, kimono items, a necktie, a handkerchief, a scarf, a muffler, a hat, gloves, and a mask for domestic or medical use.

Examples of the bedding include a futon cover, padding in a futon, a pillowcase, padding in a pillow, a towelket, a sheet, and external cladding of a mattress. Particularly, the sheet-like molded article is appropriate for the use in bedding that is difficult to wash, such as a down quilt or a down pillow.

Examples of the interior tools include a curtain, a mat, a carpet, a rug, a floor cushion, a cushion, a tapestry, wall cladding, tablecloth, and moquette.

Examples of the absorption cloth include a towel, dishcloth, a handkerchief, a mop, a diaper, a tampon, a sanitary napkin, and adult incontinence articles.

Examples of the packaging materials include a wrapping cloth, wrapping paper, and a food package.

Examples of the miscellaneous goods include various brushes such as a toothbrush, a dish scrubber, and a brush; a carrier bag, a luncheon mat, a pen case, a purse, an eyeglasses case, an eyeglasses wiper, a shop curtain, a coaster, a mouse pad, inner cotton for stuffed toys, and a pet bed.

Examples of the filtration media include filters for use in an air conditioner, a ventilating fan, an air hatch, and an air cleaner, and filters for water purification, and these could be applied to filters for domestic use, industrial use, automobile use, and the like.

Examples of other uses include artificial hair, a tent, a light-shielding sheet such as a weed preventing sheet, a soundproof material, an acoustic material, and a buffer material.

Particularly, it is preferable to use the antibacterial fiber according to the first embodiment in filters for domestic use, automobile use, and the like as antibacterial nonwoven fabrics.

These filters also have antibacterial properties that are equivalent to those of the antibacterial fiber of the present embodiment and have an excellent feature that the filters maintain the antibacterial properties even when washing is performed repeatedly.

[Second embodiment]

A second embodiment is a method for producing the antibacterial fiber described in the first embodiment and is a method for producing an antibacterial fiber containing a thermoplastic resin and antibacterial glass particles.

Further, it is a method for producing an antibacterial fiber, the antibacterial fiber having cracks extending along the length direction of the antibacterial fiber on the surface of the antibacterial fiber, each of the cracks being in a state of having at least one of the antibacterial glass particles sandwiched therein, the method including the following steps (a) to (d):

(a) a step of preparing a glass melt containing an antibacterial active ingredient and obtaining antibacterial glass particles;
(b) a step of producing an antibacterial resin composition having antibacterial glass particles and a thermoplastic resin mixed therein;
(c) a step of producing an antibacterial fiber before stretching, directly or indirectly from an antibacterial resin component; and
(d) a step of stretching the antibacterial fiber before stretching (as produced in step (C)) and thereby producing an antibacterial fiber having cracks.

Hereinafter, the method for producing an antibacterial fiber as the second embodiment will be specifically described.

The antibacterial fiber according to the present embodiment could be produced by a production method including at least the above-mentioned steps (a) to (d), and if necessary, the following steps (e) to (h) may be added.

Meanwhile, the method for producing an antibacterial nonwoven fabric formed from an antibacterial fiber according to the second embodiment is not particularly limited, and for example, it is preferable to use conventionally known methods such as a dry method, a wet method, a spun-bonding method, and a melt-blowing method.

At this time, it is preferable that elimination of fibers is suppressed by sufficiently binding or entangling fibers.

Examples of such methods include a chemical bonding method, a thermal bonding method, a needle punching method, a spun-lace method (hydroentangling method), a stitch bonding method, and a steam jet method, and among them, a thermal bonding method is preferred because sufficient binding could be achieved.

1. Step (a): Step of producing antibacterial glass particles

Step (a) is a step of producing antibacterial glass particles from a glass raw material containing an antibacterial active ingredient.

That is, the antibacterial glass particles could be produced by a conventionally known method, and for example, it is preferable to produce the antibacterial glass particles by a method including the following (a)-1 to (a)-3.

(a)-1 Melting step

In the melting step, it is preferable that glass raw materials are accurately weighed and then uniformly mixed, subsequently the mixture is melted using, for example, a glass melting furnace, and thus a glass melt is produced.

Upon mixing of the glass raw materials, it is preferable to use a mixing machine (mixer) such as a universal stirrer (planetary mixer), an alumina porcelain crusher, a ball mill, or a propeller mixer, and for example, in the case of using a universal stirrer, it is preferable that the glass raw materials are stirred and mixed by setting the speed of revolution to 100 rpm and the speed of rotation to 250 rpm, under the conditions of 10 minutes to 3 hours.

Regarding the glass melting conditions, for example, it is preferable that the melting temperature is adjusted to 1,100°C to 1,500°C and the melting time is adjusted to a value within the range of 1 to 8 hours.

The reason for this is that under such melting conditions, the production efficiency of the glass melt is increased, and at the same time, yellowing of the antibacterial glass during production could be reduced as much as possible.

Meanwhile, after such a glass melt is obtained, it is preferable that the glass melt is injected into flowing water and cooled, and water pulverization is combined to obtain a glass body.

(a)-2 Pulverization step

Next, as the pulverization step, it is preferable that the glass body thus obtained is pulverized, and antibacterial glass particles that are polyhedrons and have a predetermined volume average particle size are produced.

Specifically, it is preferable to perform crude pulverization, intermediate pulverization, and fine pulverization as described below.

By performing as such, antibacterial glass particles having a uniform volume average particle size could be efficiently obtained.

However, in order to control the volume average particle size more finely according to the use application, classification is further carried out after pulverization, and it is also preferable to perform sieve treatment or the like.

In the crude pulverization, it is preferable to pulverize the glass body so as to obtain a volume average particle size of about 10 mm.

More specifically, it is preferable to obtain a predetermined volume average particle size by performing water granulation when a glass melt in a molten state is converted into a glass body, or performing pulverization an amorphous glass body with bare hands or using a hammer or the like.

Meanwhile, it has been verified from electron microscopic photographs that the antibacterial glass after crude pulverization is usually in a lump-like state without angles.

In the intermediate pulverization, it is preferable that the antibacterial glass obtained after crude pulverization is pulverized so as to obtain a volume average particle size of about 1 mm.

More specifically, for example, it is preferable that the antibacterial glass having a volume average particle size of about 10 mm is produced into antibacterial glass having a volume average particle size of about 5 mm using a ball mill, and subsequently, antibacterial glass having a volume average particle size of about 1 mm is obtained using a rotary mortar or a rotating roll (roll pulverizer).

The reason for this is that when intermediate pulverization is carried out in multiple stages as such, antibacterial glass having a predetermined particle size could be effectively obtained without having an antibacterial glass having excessively small particle sizes produced therein.

Meanwhile, it has been verified from electron microscopic photographs that the antibacterial glass obtained after intermediate pulverization includes polyhedrons having angles.

In the fine pulverization, it is preferable that the antibacterial glass obtained after intermediate pulverization is pulverized so as to obtain a volume average particle size of 1.0 to 5.0 $\mu$m, in a state in which aggregated silica particles have been added as an external additive having a volume average particle size of 1 to 15 $\mu$m.

More specifically, for example, it is preferable to pulverize the antibacterial glass using a rotary mortar, a rotating roll (roll crusher), a vibrating mill, a vertical mill, a dry ball mill, a planetary mill, a sand mill, or a jet mill.

Among these dry pulverizing machines, it is more preferable to use a vertical mill, a dry ball mill, a planetary mill, and a jet mill in particular.

The reason for this is that appropriately shear force could be exerted by using a vertical mill, a planetary mill, or the like, and antibacterial glass as a polyhedron having a predetermined particle size could be effectively obtained without having an antibacterial glass having excessively small particle sizes produced therein.

In the case of performing fine pulverization using a vertical mill, a dry ball mill, a planetary mill, or the like, it is preferable that a vessel is rotated at a rate of 30 to 100 rpm using zirconia balls or alumina balls as pulverizing media 4, and the antibacterial glass obtained after intermediate pulverization is subjected to a pulverization treatment for 5 to 50 hours.

Furthermore, in the case of using a jet mill, it is preferable that acceleration is achieved in a vessel, and antibacterial glass particles obtained after intermediate pulverization are caused to collide with one another at a pressure of 0.61 to 1.22 MPa (6 to 12 Kgf/cm$^2$).

Meanwhile, it has been verified from electron microscopic photographs and particle size distribution measurement that the antibacterial glass obtained after performing fine pulverization using a dry ball mill, a jet mill, or the like is a polyhedron having more numerous angles than the antibacterial glass obtained after intermediate pulverization, and the volume average particle size (D50) and the specific surface area could be easily adjusted to predetermined ranges.

Furthermore, in a case in which fine pulverization is performed using a planetary mill or the like, it is preferable to perform fine pulverization substantially in a dry state (for example, the relative humidity is 20%RH or less).

The reason for this is that a classification apparatus such as a cyclone could be attached to a planetary mill or the like, and the antibacterial glass could be circulated without causing the antibacterial glass to aggregate.

Therefore, the volume average particle size and the particle size distribution for the antibacterial glass particles could be easily adjusted to desired ranges by controlling the number of times of circulation, and at the same time, a drying step after fine pulverization could be omitted.

On the other hand, regarding antibacterial glass that is smaller than or equal to a predetermined range, when the antibacterial glass is in a dry state, the antibacterial glass could be easily removed using a bag filter.

Therefore, adjustment of the volume average particle size and the particle size distribution for the antibacterial glass particle becomes even easier.

(a)-3 Drying step

Next, it is preferable that the antibacterial glass particles obtained in the pulverization step are dried in a drying step.

The reason for this is that as the antibacterial glass particles are dried, when the antibacterial glass particles are mixed with a thermoplastic resin in the step described below, the possibility that the thermoplastic resin may cause hydrolysis could be reduced.

Meanwhile, in the drying step, it is preferable to also perform a drying treatment after performing a solid-liquid separation treatment, and the facilities used for these treatments are not particularly limited. However, a centrifuge or the like could be used for the solid-liquid separation, and a dryer, an oven, or the like could be used for drying.

Furthermore, after the drying step of the antibacterial glass particles, some of the antibacterial glass is aggregated. Therefore, it is preferable that the aggregated antibacterial glass is disintegrated using a disintegrator.

2. Step (b): Production of antibacterial resin composition

Step (b) is a step of producing an antibacterial resin composition using the antibacterial glass particles obtained in step (a).

In step (b), it is preferable that an antibacterial resin composition is produced by melt kneading the antibacterial glass particles or a masterbatch obtained by dispersing the antibacterial glass particles in a thermoplastic resin, together with resin pellets or regenerated resin flakes.

Furthermore, in step (b), it is also preferable to further add additives such as a colored masterbatch, an oxidation inhibitor, an internal lubricating agent, and a crystallizing agent.

Further, in step (b), it is preferable to produce an antibacterial resin composition by mixing and dispersing 0.1 to 10 parts by weight of the antibacterial glass particles thus obtained, with 100 parts by weight of a thermoplastic resin.

Furthermore, regarding the thermoplastic resin, in the case of using a polyethylene terephthalate resin as a main component, it is preferable to mix and disperse a polybutylene terephthalate resin.

This is because hydrolysis of the polyethylene terephthalate resin as a main component is effectively suppressed, and an antibacterial resin composition in which the antibacterial glass particles at the final concentration are uniformly dispersed could be obtained.

More specifically, moisture-containing antibacterial glass particles at a high concentration are mixed and dispersed into a polyethylene terephthalate resin as a main component having relatively inferior hydrolysis resistance, the antibacterial glass particles being in a state of being dispersed in a polybutylene terephthalate resin having relatively superior hydrolysis resistance.

Therefore, for example, when the mixture is melt kneaded by a twin-screw kneading machine or the like, the polyethylene terephthalate resin and the antibacterial glass particles are moderately separated in a state in which hydrolysis of the polyethylene terephthalate resin is most likely to occur.

As a result, the polyethylene terephthalate resin as a main component being hydrolyzed is effectively suppressed, and an antibacterial resin composition having the antibacterial glass uniformly dispersed therein at the final concentration could be obtained.

3. Step (c): Step of producing antibacterial fiber (before stretching)

Step (c) is a step of spinning the antibacterial resin composition obtained in step (b) to produce fibers.

In step (c), it is preferable that the antibacterial resin composition is produced into fibers by discharging the molten antibacterial resin composition through a spinneret and cooling the discharged antibacterial resin composition under the spinneret.

The cooling method is not particularly limited; however, preferred examples include a method of blowing cool air against the spun yarn lines, and a method of cooling the yarn lines by passing them through a cooling tank containing cooling water.

It is also preferable that the yarn is first wound up as necessary and then is subjected to a stretching treatment.

Regarding the molding apparatus used upon spinning, any conventionally known apparatus could be used.

For example, it is preferable to use a bulk molding compound (BMC) injection molding apparatus, a sheet molding compound (SMC) compression molding apparatus, a bulk molding compound (BMC) compression molding apparatus, or a pressing apparatus.

The reason for this is that when such a molding apparatus is used, an antibacterial fiber having excellent surface smoothness could be efficiently obtained.

The shape of the yarn is not particularly limited; however, the shape may be a circular shape or a flat shape, or may be a polygonal shape such as a hexagonal shape or a star shape. It is also preferable to adopt a hollow shape.

The spinning temperature is preferably from 280°C to 320°C, and the winding speed is preferably from 100 m/min to 6,000 m/min.

4. Step (d): Step of producing antibacterial fiber (after stretching)

Step (d) is a step of stretching the fibers obtained by spinning in step (c).

When the yarn is stretched in step (d), as force is exerted to the fibers themselves from the antibacterial glass particles having angles within the fibers, cracks extending along the fiber length direction are formed before and after the antibacterial glass particles exposed at the fiber surface.

Here, the stretching step could be carried out using conventionally known methods and apparatuses, and for example, it is preferable to employ a direct spinning and stretching method or a roller stretching method.

The direct spinning and stretching method is carried out by first cooling the fibers to a temperature lower than or equal to the glass transition point after spinning, subsequently causing the fibers to travel inside a tubular heating apparatus at a temperature ranging from the glass transition temperature to the melting point, and winding the fibers.

The roller stretching method is carried out by taking over the spun yarn by winding around a take-over roller that rotates at a predetermined speed, and stretching the yarn thus taken over in one stage or in multiple stages such as two or more stages, by means of a group of rollers set to a temperature ranging from the glass transition temperature to the melting point of the thermoplastic resin.

Meanwhile, regarding the stretch ratio, it is preferable that the stretch ratio is 1.2 times or higher from the viewpoint of forming a sufficient number of cracks having a sufficient size.

The upper limit of the stretch ratio is not particularly limited; however, from the viewpoint of preventing breakage of the yarn caused by excessive stretching, it is preferable that the stretch ratio is 7 times or less.

5. Step (e): Crimping step

The crimping step of step (e) is an optional process and is a step of guiding the stretched yarn obtained in step (d) into a crimping apparatus, subjecting the yarn to false twisting, and imparting bulkiness and stretchability to the yarn.

In the crimping step, conventionally known methods and apparatuses could be used, and for example, it is preferable to use a heated fluid crimping apparatus that subjects a yarn to false twisting by bringing the yarn into contact with a heated fluid.

The heated fluid crimping apparatus is an apparatus that gives crimps to yarn lines by spraying a heated fluid such as, for example, vapor, to the yarn lines and forcing in the yarn lines together with the heated fluid into a compression adjustment unit.

Here, it is preferable that the temperature of the heated fluid is adjusted to a value within the range of 100°C to 150°C.

The reason for this is that when the temperature is within the above-described range, fusion between fibers could be avoided while sufficient crimping is achieved.

Therefore, more specifically, it is more preferable that the temperature of the heated fluid is adjusted to a value within the range of 110°C to 145°C, and it is even more preferable that the temperature is adjusted to a value within the range of 115°C to 140°C.

6. Step (f): Thermosetting step

The thermosetting step of step (f) is also an optional process and is a step of guiding the crimped yarn obtained in step (e) into a thermosetting roller and adjusting the degree of elongation.

7. Step (g): Dyeing step

The dyeing step of step (g) is also an optional process and is a step of dyeing the antibacterial fibers that have been stretched and then subjected to crimping and/or thermosetting as necessary, under alkaline conditions or acidic conditions.

In such a dyeing step, conventionally known methods and apparatuses could be used, and it is preferable to use, for example, manual dyeing, package dyeing, spray dyeing, rotating bag dyeing, Obermaier dyeing, or cheese dyeing.

It is also preferable that the dyeing solution includes, along with a dye, dyeing aids such as a level dyeing agent, a dye accelerant aid, and a metal sequestering agent, a dye-fixing agent, and a fluorescent brightening agent, as necessary.

In the case of performing dyeing under alkaline conditions, the pH could be adjusted to 7.5 to 10.5, and it is preferable to use a carbonic acid salt such as calcium carbonate, sodium hydroxide, or the like for the adjustment of pH.

In the case of performing dyeing under acidic conditions, the pH could be adjusted to 3.5 to 6.5, and it is preferable to use an organic acid such as acetic acid, citric acid, malic acid, fumaric acid, or succinic acid, and salts thereof for the adjustment of pH.

After dyeing, it is preferable to perform batch washing, and it is also preferable to perform reduction washing or soaping.

For the washing conditions, the conditions that are implemented for conventional polyester fibers could be employed, and in the case of reduction washing, a reducing agent, an alkali, and sodium hydrosulfite could be used respectively in an amount of 0.5 to 3 g/L. It is preferable to treat the fibers at 60°C to 80°C for 10 to 30 minutes.

8. Step (h): Optional step of forming protective layer

As step (h), it is preferable to provide a step of forming a protective layer on the surface of the antibacterial fibers.

It is preferable that such a protective layer is formed by performing a surface treatment with a mixture of an acrylic resin, a urethane resin, a vinyl acetate resin, an epoxy resin or the like and any one of an epoxy compound and an aliphatic amine-based compound.

EXAMPLES

Hereinafter, the invention will be described in more detail using Examples.

However, unless particularly stated otherwise, the invention is not intended to be limited to the following description of Examples.

[Example 1]

1. Production of antibacterial glass

(1) Melting step

The respective glass raw materials were stirred until the components were uniformly mixed, using a universal mixing machine under the conditions of a speed of rotation of 250 rpm and 30 minutes, such that when the total amount of the mixing components of the antibacterial glass was designated as 100% by weight, the composition ratio of $P_2O_5$ would be 50% by weight, the composition ratio of CaO would be 5% by weight, the composition ratio of $Na_2O$ would be 1.5% by weight, the composition ratio of $B_2O_3$ would be 10% by weight, the composition ratio of $Ag_2O$ would be 3% by weight, the composition ratio of $CeO_2$ would be 0.5% by weight, and the composition ratio of ZnO would be 30% by weight.

Next, the glass raw materials were heated using a melting furnace under the conditions of 1,280°C and 3.5 hours, and thereby a glass melt was produced.

(2) Crude pulverization step

The glass melt taken out from the glass melting furnace was water-granulated by causing the glass melt to flow into still water at 25°C, and crude pulverized glass having a volume average particle size of about 10 mm was obtained.

Meanwhile, the crude pulverized glass in this stage was observed with an optical microscope, and as a result, it was confirmed that the crude pulverized glass was in a lump-like state without any angles or faces.

(3) Intermediate pulverization step

Next, primary intermediate pulverization (volume average particle size about 1,000 $\mu$m) was performed using a pair of rotating rolls made of alumina (manufactured by TOKYO ATOMIZER M.F.G. CO., LTD., roll pulverizer) under the conditions of a gap of 1 mm and a speed of rotation of 150 rpm, while the crude pulverized glass was supplied from a hopper by utilizing the weight of the glass itself.

Furthermore, the crude pulverized glass that had been treated by primary intermediate pulverization was subjected to secondary intermediate pulverization using a rotary mortar made of alumina (manufactured by CHUO KAKOHKI CO., LTD., PREMAX) under the conditions of a gap of 400 $\mu$m and a speed of rotation of 700 rpm, and an intermediate pulverized glass having a volume average particle size of about 400 $\mu$m was obtained.

This intermediate pulverized glass was observed with an electron microscope, and as a result, it was confirmed that at least 50% by weight or more was polyhedrons having angles or faces.

(4) Fine pulverization step

Next, 210 kg of alumina spheres having a diameter of 10 mm as media, 20 kg of the intermediate pulverized glass that had been subjected to secondary intermediate pulverization, 14 kg of isopropanol, and 0.2 kg of silane coupling agent A-1230 (manufactured by NUC Corporation) were respectively accommodated in a vibrating ball mill having an internal capacity of 105 liters (manufactured by CHUO KAKOHKI CO., LTD.), and then a fine pulverization treatment was performed for 7 hours under the conditions of a speed of rotation of 1,000 rpm and a vibration width of 9 mm. Thus, a fine pulverized glass was obtained.

Meanwhile, this fine pulverized glass was observed with an electron microscope, and as a result, it was confirmed that at least 70% by weight or more was polyhedrons having angles or faces.

(5) Solid-liquid separation and drying step

The fine pulverized glass obtained in the previous step and isopropanol were subjected to solid-liquid separation using a centrifuge (manufactured by KOKUSAN Co., Ltd.) under the conditions of a speed of rotation of 3,000 rpm and 3 minutes.

Next, the fine pulverized glass was dried using an oven under the conditions of 105°C and 3 hours.

(6) Crushing step

The fine pulverized glass that had been dried and thereby partially agglomerated was crushed using a gear type crusher (manufactured by CHUO KAKOHKI CO., LTD.), and an antibacterial glass (polyhedral glass) having a volume average particle size of 2.0 $\mu$m was obtained.

Meanwhile, the antibacterial glass in this stage was observed with an electron microscope, and as a result, it was confirmed that at least 90% by weight or more was polyhedrons having angles or faces.

2. Production of antibacterial fiber

(1) Spinning step

1 part by weight of antibacterial glass particles, 95 parts by weight of a polyethylene terephthalate resin having a number average molecular weight of 34,000, and 5 parts by weight of a polybutylene terephthalate resin having a number average molecular weight of 26,000 were mixed and dispersed using a bulk molding compound (BMC) injection molding apparatus at a cylinder temperature of 250°C and a speed of screw rotation of 30 rpm, and thus an antibacterial resin composition was obtained.

Meanwhile, a predetermined amount of antibacterial glass particles were mixed into a polybutylene terephthalate resin to obtain a masterbatch, and then a polyethylene terephthalate resin was mixed therein. Thereby, while hydrolysis of the polyethylene terephthalate resin was suppressed, an antibacterial resin composition finally having the above-described mixing ratios was obtained.

Then, the antibacterial resin composition thus obtained was discharged through a spinneret at a spinning temperature of 90°C and a winding speed of 3,000 m/min to produce antibacterial fibers.

(2) Stretching step

Next, the antibacterial fibers were stretched to three times by stretching while heating the antibacterial fibers to 90°C by passing the fibers through a tubular heating apparatus, and thereby antibacterial fibers having an average diameter of 10 $\mu$m were obtained.

The antibacterial fibers thus obtained were observed by SEM, and cracks on the surface of the antibacterial fibers, and antibacterial glass particles sandwiched in the cracks could be recognized.

The average length of the cracks was different for each of the particle sizes of the antibacterial glass particles to be sandwiched, and the average length of the cracks having antibacterial glass particles with a particle size of 2 $\mu$m sandwiched therein was 4 $\mu$m on the average.

3. Evaluation of antibacterial fibers

(1) Chemical fiber staple test

For the antibacterial fibers obtained in Example 1, the average fiber length (direct method), apparent fineness, tensile strength and elongation ratio, number of crimps and crimp ratio, rate of dry heat-induced dimensional change (%), rate of hot water-induced dimensional change (%), and oil and fat content (%) were measured according to JIS L 1015.

The initial weighting at the time of measuring the tensile strength was set to 5.88 mN/1 tex, the tensile rate to 20 mm/min, and the length of the specimen between grips to 10 mm.

The temperature of the dryer at the time of measuring the rate of dry heat-induced dimensional change was set to 180°C.

The hot water temperature at the time of measuring the rate of hot water-induced dimensional change was set to 100°C.

The measurement of the oil and fat content was carried out by extracting for three hours with petroleum ether using a Soxhlet extractor. The results thus obtained will be described in Table 1.

Furthermore, the relationship between the degree of elongation of the fibers thus obtained and the strength at the time of cutting is described in Fig. 8.

(2) Evaluation of antibacterial properties

(2)-1 Testing method

The antibacterial fibers obtained in Example 1 were processed into a nonwoven fabric, and for Escherichia coli, Moraxella osloensis, Staphylococcus aureus, and Klebsiella pneumoniae, the viable cell count immediately after inoculation and the viable cell count after an elapse of 18 hours of culture were measured. The antibacterial properties were evaluated by a bacterial liquid absorbing method according to JIS L 1902.

That is, the measurement of the viable cell count was carried out by a pour plate culture method after adding Tween80 (manufactured by Tokyo Chemical Industry Co., Ltd.) as a surfactant to the test bacterial liquid.

For Trichophyton fungus, the amount of ATP was measured by an absorbing method according to JIS L 1921:2015.

Meanwhile, in the antibacterial properties test according to a bacterial liquid absorbing method, a sample having an antibacterial activity value of 2.0 or higher is considered to have suitable antibacterial properties.

The growth value required for the antibacterial properties evaluation of an antibacterial nonwoven fabric and the antibacterial activity can be calculated by the following formulae.

$$G \text{ (growth value for antibacterial nonwoven fabric)} = \log T_t - \log T_0$$

$$A \text{ (antibacterial activity value)} = (\log C_t - \log C_0) - (\log T_t - \log T_0) = F - G$$

$$F \text{ (growth value of standard cotton cloth for antibacterial test)} = \log C_t - \log C_0$$

$\log T_t$ : Common logarithm of the arithmetic mean of the viable cell count for the antibacterial nonwoven fabric after culture for 18 hours

$\log T_0$ : Common logarithm of the arithmetic mean of the viable cell count for the antibacterial nonwoven fabric immediately after inoculation

$\log C_t$ : Common logarithm of the arithmetic mean of the viable cell count for a standard cotton cloth for an antibacterial test after culture for 18 hours

$\log C_0$ : Common logarithm of the arithmetic mean of the viable cell count for a standard cotton cloth for an antibacterial test immediately after inoculation

(In the case of $\log C_0 > \log T_0$, a calculation is performed by substituting $\log T_0$ with $\log C_0$.)

(With regard to Trichophyton fungus, a calculation is performed by substituting the viable cell count with the amount of ATP.)

Then, according to JIS L 1902:2015, the antibacterial properties were respectively evaluated before performing washing of the antibacterial fiber and after washing for 50 times. The results thus obtained are described in Table 2.

[Example 2]

In Example 2, an antibacterial fiber was produced in the same manner as in Example 1, except that the mixing components of the antibacterial glass were mixed such that when the total amount of the mixing components of the antibacterial glass was designated as 100% by weight, the composition ratio of $P_2O_5$ would be 76% by weight, the composition ratio of $Al_2O_3$ would be 0.3% by weight, the composition ratio of CaO would be 20% by weight, the composition ratio of NaO would be 0.7% by weight, and the composition ratio of $Ag_2O$ would be 3% by weight. An evaluation of the fiber and an evaluation of the antibacterial properties were carried out in the same manner as in Example 1. The results thus obtained are described in Table 1 and Table 2.

Meanwhile, the antibacterial fiber obtained in Example 2 was observed by SEM, and similarly to Example 1, cracks on the surface of the antibacterial fiber, and antibacterial glass particles sandwiched in the cracks could be recognized.

[Example 3]

In Example 3, an antibacterial fiber was produced in the same manner as in Example 1, except that the antibacterial fiber was stretched such that the average length of the cracks having antibacterial glass particles with a particle size of 3.5 $\mu$m sandwiched therein would be 6 $\mu$m. An evaluation of the fiber and an evaluation of the antibacterial properties were carried out in the same manner as in Example 1. The results thus obtained are described in Table 1 and Table 2.

[Example 4]

In Example 4, an antibacterial fiber was produced in the same manner as in Example 1, except that a polypropylene resin having a number average molecular weight (Mn) of about 500,000 (manufactured by Prime Polymer Co., Ltd.) was used as a main component, and a mixing resin was not used. An evaluation of the fiber and an evaluation of the antibacterial properties were carried out in the almost similar manner to Example 1.

As a result, also in Example 4, it was confirmed that fiber evaluation results almost similar to the results of Example 1, and antibacterial properties evaluation results similar to results of Example 1 were obtained.

Meanwhile, the antibacterial fiber obtained in Example 4 was observed by SEM, and similarly to Example 1, cracks on the surface of the antibacterial fiber, and antibacterial glass particles sandwiched in the cracks could be recognized.

[Example 5]

In Example 5, an antibacterial fiber was produced in the same manner as in Example 1, except that a polyamide resin having a number average molecular weight (Mn) of 40,000 (manufactured by Toray Industries, Inc., nylon 66) was used as a main component, and a mixing resin was not used. An evaluation of the fiber and an evaluation of the antibacterial properties were carried out in the same manner as in Example 1.

As a result, also in Example 5, it was confirmed that fiber evaluation results and antibacterial properties evaluation results almost similar to the results of Example 1 were obtained.

Meanwhile, the antibacterial fiber thus obtained was observed by SEM, and similarly to Example 1, cracks on the surface of the antibacterial fiber, and antibacterial glass particles sandwiched in the cracks could be recognized.

[Comparative Example 1]

In Comparative Example 1, an antibacterial fiber was produced in the same manner as in Example 1, except that a stretching heat treatment was not carried out after melt spinning, and an evaluation of the fiber and an evaluation of the antibacterial properties were carried out. The results thus obtained are described in Table 1 and Table 2.

Meanwhile, the antibacterial fiber obtained in Comparative Example 1 was observed by SEM, and cracks on the surface of the antibacterial fiber could not be recognized.

[Comparative Example 2]

In Comparative Example 2, the antibacterial properties of a standard cotton cloth for an antibacterial test were evaluated according to JIS L 1902. The results thus obtained are described in Table 2.

[Table 1]

| | Average fiber length (mm) | Apparent strength (dtex) | Tensile strength (cN/dtex) | Cutting strength (cN) | Fluctuation rate of same (%) | Degree of elongation (%) | Number of crimps (crimps/2.5 cm) | Rate of dry heat-induced dimensional change (%) | Rate of heat-induced dimensional change (%) | Oil and fat content (%) |
|---|---|---|---|---|---|---|---|---|---|---|
| Example 1 | 38.00 | 1.61 | 3.94 | 6.38 | 6.70 | 39.70 | 14.20 | -7.40 | -1.00 | 0.11 |
| Example 2 | 38.00 | 1.60 | 3.98 | 6.15 | 6.71 | 39.72 | 14.30 | -7.30 | -1.03 | 0.10 |
| Example 3 | 38.00 | 1.60 | 3.96 | 6.22 | 6.71 | 39.70 | 14.30 | -7.35 | -1.02 | 0.10 |
| Comparative Example 1 | 38.00 | 1.70 | 4.11 | 6.10 | 6.10 | 43.00 | 17.20 | -7.40 | -1.00 | 0.12 |

[Table 2]

| | Escherichia coli | | Moraxella osloensis | | Trichophyton fungus | | Staphylococcus aureus | | Klebsiella pneumoniae | |
|---|---|---|---|---|---|---|---|---|---|---|
| | Growth value | Antibacterial activity value | Growth value | Antibacterial activity value | Growth value | Antibacterial activity value | Growth value | Antibacterial activity value | Growth value | Antibacterial activity value |
| Example 1 (before washing) | -3.0 | 6.3 | -3.2 | 6.4 | -0.8 | 3.0 | -3.1 | 5.9 | -3.1 | 6.1 |
| Example 1 (after 50 times of washing) | -3.0 | 6.3 | -3.2 | 6.4 | -0.8 | 3.0 | -3.1 | 5.9 | -3.1 | 6.1 |
| Example 2 (before washing) | -2.8 | 6.1 | -3.3 | 6.5 | -0.7 | 2.9 | -3.2 | 6.0 | -3.0 | 6.0 |
| Example 2 (after 50 times of washing) | -2.8 | 6.1 | -3.3 | 6.5 | -0.7 | 2.9 | -3.2 | 6.0 | -3.0 | 6.0 |
| Example 3 (before washing) | -2.9 | 6.2 | -3.3 | 6.5 | -0.8 | 3.0 | -3.2 | 6.0 | -3.0 | 6.0 |
| Example 3 (after 50 times of washing) | -2.9 | 6.2 | -3.3 | 6.5 | -0.8 | 3.0 | -3.2 | 6.0 | -3.0 | 6.0 |
| Comparative Example 1 (before washing) | -3.0 | 6.3 | -3.2 | 6.4 | -0.8 | 3.0 | -3.1 | 5.9 | -3.1 | 6.1 |
| Comparative Example 1 (after 50 times of washing) | 2.5 | 0.8 | 1.8 | 1.4 | 1.1 | 1.1 | 2.0 | 0.8 | 1.8 | 1.2 |
| Comparative Example 2 (standard cotton cloth) | 3.3 | - | 3.2 | - | 2.2 | - | 2.8 | - | 3.0 | - |

INDUSTRIAL APPLICABILITY

As described above, according to the invention, an antibacterial fiber that exhibits excellent antibacterial properties even in a case in which, for example, the antibacterial fiber is washed 50 or more times under predetermined conditions, while maintaining predetermined mechanical strength, and an efficient production method for such an antibacterial fiber could be provided.

Therefore, it is expected to provide various fiber products that can exhibit excellent antibacterial properties and deodorizing properties not only in the early stage but also after use for a long period of time (including washing), and also exhibit excellent clean sensation, safety, economic efficiency, and the like.

Furthermore, when the antibacterial fiber of the present invention is used, since predetermined cracks are formed on the surface, it is also expected to provide various fiber products for which the regulation of the sense of touch (texture) of the surface and dyeability could be easily achieved by appropriately adjusting the size, shape, and the like of the cracks.

**Claims**

1. An antibacterial fiber, comprising a thermoplastic resin and antibacterial glass particles,

   wherein the antibacterial glass particles are formed from phosphate-based antibacterial glass containing $Ag_2O$,
   the antibacterial fiber has cracks extending along the length direction of the antibacterial fiber on the surface of the antibacterial fiber,
   an average length of the cracks has a value within the range of 1 to 30 $\mu$m, and
   each of the cracks is in a state of having at least one of the antibacterial glass particles sandwiched therein.

2. The antibacterial fiber according to claim 1, wherein the volume average particle size of the antibacterial glass particles has a value within the range of 0.2 to 5 $\mu$m.

3. The antibacterial fiber according to claim 1 or 2, wherein the shape of the antibacterial glass particles is a polyhedron.

4. The antibacterial fiber according to any one of claims 1 to 3, wherein the amount of incorporation of the antibacterial glass particles is adjusted to a value within the range of 0.1 to 10 parts by weight with respect to 100 parts by weight of the thermoplastic resin.

5. The antibacterial fiber according to any one of claims 1 to 4, wherein the antibacterial fiber has a protective layer on the surface.

6. A method for producing an antibacterial fiber containing a thermoplastic resin and antibacterial glass particles, wherein the antibacterial glass particles are formed from phosphate-based antibacterial glass containing $Ag_2O$, the antibacterial fiber having cracks extending along the length direction of the antibacterial fiber on the surface of the antibacterial fiber, an average length of the cracks is adjusted to a value within the range of 1 to 30 $\mu$m, each of the cracks being in a state of having at least one of the antibacterial glass particles sandwiched therein, and the method comprising the following steps (a) to (d):

   (a) a step of preparing a glass melt including an antibacterial active ingredient and obtaining antibacterial glass particles;
   (b) a step of producing an antibacterial resin composition by mixing the antibacterial glass particles and a thermoplastic resin;
   (c) a step of producing an antibacterial fiber before stretching directly or indirectly from the antibacterial resin component; and
   (d) a step of producing an antibacterial fiber having cracks by stretching the antibacterial fiber that was produced in step (c), which is the fiber before stretching.

**Patentansprüche**

1. Antibakterielle Faser, die ein thermoplastisches Harz und antibakterielle Glasteilchen umfasst,

wobei die antibakteriellen Glasteilchen aus $Ag_2O$ enthaltendem antibakteriellem Glas auf Phosphatbasis gebildet sind,

die antibakterielle Faser Risse aufweist, die in der Längsrichtung der antibakteriellen Faser auf der Oberfläche der antibakteriellen Faser verlaufen,

eine Durchschnittslänge der Risse einen Wert innerhalb eines Bereichs von 1 bis 30 μm aufweist, und

jeder von den Rissen in einem solchen Zustand ist, dass mindestens eines von den antibakteriellen Glasteilchen darin eingebettet ist.

2. Antibakterielle Faser nach Anspruch 1, wobei die durchschnittliche volumenbasierte Teilchengröße der antibakteriellen Glasteilchen einen Wert innerhalb des Bereichs von 0,2 bis 5 μm aufweist.

3. Antibakterielle Faser nach Anspruch 1 oder 2, wobei die Form der antibakteriellen Glasteilchen mehreckig ist.

4. Antibakterielle Faser nach einem der Ansprüche 1 bis 3, wobei die Menge der aufgenommenen antibakteriellen Glasteilchen auf einen Wert innerhalb des Bereichs von 0,1 bis 10 Gewichtsteile in Bezug auf 100 Gewichtsteile des thermoplastischen Harzes eingestellt ist.

5. Antibakterielle Faser nach einem der Ansprüche 1 bis 4, wobei die antibakterielle Faser eine Schutzschicht auf der Oberfläche aufweist.

6. Verfahren zum Herstellen einer antibakteriellen Faser, die ein thermoplastisches Harz und antibakterielle Glasteilchen enthält, wobei die antibakteriellen Glasteilchen aus $Ag_2O$ enthaltendem antibakteriellem Glas auf Phosphatbasis gebildet sind, wobei die antibakterielle Faser auf der Oberfläche der antibakteriellen Faser Risse aufweist, wobei eine Durchschnittslänge der Risse auf einen Wert innerhalb des Bereichs von 1 bis 30 μm eingestellt ist, wobei sich jeder von den Rissen in einem solchen Zustand befindet, dass mindestens eines von den antibakteriellen Glasteilchen darin eingebettet ist, und

wobei das Verfahren die folgenden Schritte(a) bis (d) umfasst:

(a) einen Schritt, in dem eine Glasschmelze hergestellt wird, die einen antibakteriellen Wirkstoff enthält, und antibakterielle Glasteilchen erhalten werden;

(b) einen Schritt, in dem durch Mischen der antibakteriellen Glasteilchen und eines thermoplastischen Harzes eine antibakterielle Harzzusammensetzung produziert wird;

(c) einen Schritt, in dem aus der antibakteriellen Harzkomponente eine antibakterielle Faser produziert wird, die noch nicht direkt oder indirekt gestreckt worden ist; und

(d) einen Schritt, in dem eine antibakterielle Faser produziert wird, die aufgrund einer Streckung der in Schritt (c) erzeugten antibakteriellen Faser, welche die noch nicht gestreckte Faser ist, Risse aufweist.

**Revendications**

1. Fibre antibactérienne, comprenant une résine thermoplastique et des particules de verre antibactérien,

les particules de verre antibactérien étant formées d'un verre antibactérien à base de phosphate contenant $Ag_2O$, la fibre antibactérienne possédant des fissures s'étendant le long de la direction longitudinale de la fibre antibactérienne sur la surface de la fibre antibactérienne,

une longueur moyenne des fissures possédant une valeur dans la plage de 1 à 30 μm, et

chacune des fissures étant dans un état où elles possèdent au moins une des particules de verre antibactérien prises en sandwich dans celles-ci.

2. Fibre antibactérienne selon la revendication 1, la taille moyenne de particule en volume des particules de verre antibactérien possédant une valeur dans la plage de 0,2 à 5 μm.

3. Fibre antibactérienne selon la revendication 1 ou 2, la forme des particules de verre antibactérien étant un polyèdre.

4. Fibre antibactérienne selon l'une quelconque des revendications 1 à 3, la quantité d'incorporation des particules de verre antibactérien étant ajustée à une valeur dans la plage de 0,1 à 10 parties en poids par rapport à 100 parties en poids de la résine thermoplastique.

5. Fibre antibactérienne selon l'une quelconque des revendications 1 à 4, la fibre antibactérienne possédant une couche protectrice sur la surface.

6. Procédé pour la production d'une fibre antibactérienne contenant une résine thermoplastique et des particules de verre antibactérien, les particules de verre antibactérien étant formées d'un verre antibactérien à base de phosphate contenant $Ag_2O$, la fibre antibactérienne possédant des fissures s'étendant le long de la direction longitudinale de la fibre antibactérienne sur la surface de la fibre antibactérienne, une longueur moyenne des fissures étant ajustée à une valeur dans la plage de 1 à 30 $\mu$m, chacune des fissures étant dans un état où elles possèdent au moins une des particules de verre antibactérien prises en sandwich dans celles-ci, et

le procédé comprenant les étapes suivantes (a) à (d) :

(a) une étape de préparation d'une masse fondue de verre comportant un ingrédient actif antibactérien et d'obtention de particules de verre antibactérien ;
(b) une étape de production d'une composition de résine antibactérienne en mélangeant les particules de verre antibactérien et une résine thermoplastique ;
(c) une étape de production d'une fibre antibactérienne avant d'étirer directement ou indirectement à partir du composant de résine antibactérienne ; et
(d) une étape de production d'une fibre antibactérienne possédant des fissures en étirant la fibre antibactérienne qui a été produite dans l'étape (c), qui est la fibre avant étirage.

Fig.1

Fig.2

Fig.3(a)

Example 1

Escherichia coli

Before washing

Immediately after inoculation

Fig.3(b)

Example 1

Escherichia coli

Before washing

After culture for 18 hours

Fig.4(a)

No. 20217062208 ⑨

(一財) ボーケン品質評価機構

Example 1
Klebsiella pneumoniae
Before washing
Immediately after inoculation

Fig.4(b)

No. 20217062208 ⑩

(一財) ボーケン品質評価機構

Example 1
Klebsiella pneumoniae
Before washing
After culture for 18 hours

Fig.5(a)

Example 1
Klebsiella pneumoniae
After 50 times of washing
Immediately after inoculation

Fig.5(b)

Example 1
Klebsiella pneumoniae
After 50 times of washing
After culture for 18 hours

Fig.6(a)

Example 1

Staphylococcus aureus

After 50 times of washing

Immediately after inoculation

Fig.6(b)

Example 1

Staphylococcus aureus

After 50 times of washing

After culture for 18 hours

Fig.7(a)

Comparative Example 2
Klebsiella pneumoniae
Immediately after inoculation

Fig.7(b)

Comparative Example 2
Klebsiella pneumoniae
After culture for 18 hours

Fig.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014020197 A
- JP 2013185292 A
- JP 2009084758 A